# EUROPÄISCHE PATENTSCHRIFT

(11) **EP 3 337 764 B1**
(45) Veröffentlichungstag und Bekanntmachung des Hinweises auf die Patenterteilung: **08.04.2020**
(21) Anmeldenummer: 16753593.9
(22) Anmeldetag: 26.07.2016
(51) Int. Cl.: C01G 53/00, H01M 4/505, H01M 4/525

(54) **LITHIUM-NICKEL-MANGAN-BASIERTE ÜBERGANGSMETALLOXIDPARTIKEL, DEREN HERSTELLUNG SOWIE DEREN VERWENDUNG ALS ELEKTRODENMATERIAL**
LITHIUM-NICKEL-MANGANESE-BASED TRANSITION METAL OXIDE PARTICLES, PRODUCTION THEREOF, AND USE THEREOF AS AN ELECTRODE MATERIAL
PARTICULES D'OXYDE DE MÉTAUX DE TRANSITION À BASE DE LITHIUM-NICKEL-MANGANÈSE, LEUR PRODUCTION AINSI QUE LEUR UTILISATION EN TANT QUE MATÉRIAU D'ÉLECTRODE

(30) Priorität: 17.09.2015 DE 102015115691
(43) Veröffentlichungstag der Anmeldung: 27.06.2018
(73) Patentinhaber: Zentrum für Sonnenenergie- und Wasserstoff-Forschung Baden-Württemberg Gemeinnützige Stiftung, 70563 Stuttgart (DE)
(72) Erfinder: WOHLFAHRT-MEHRENS, Margret, 89257 Illertissen (DE); AXMANN, Peter, 89155 Erbach (DE); WEIRATHER, Wolfgang, 89160 Dornstadt / Bollingen (DE); GABRIELLI, Giulio, 89231 Neu-Ulm (DE); MANCINI, Marilena, 89198 Westerstetten (DE)
(74) Vertreter: Ter Meer Steinmeister & Partner
(86) Internationale Anmeldenummer: PCT/EP2016/067770
(87) Internationale Veröffentlichungsnummer: WO 2017/045817

(56) Entgegenhaltungen:
- CN-A- 104 300 109
- US-A1- 2011 052 981
- US-A1- 2014 011 090
- JIE SONG ET AL: "Role of Oxygen Vacancies on the Performance of Li[Ni 0.5- x Mn 1.5+ x ]O 4 ( x = 0, 0.05, and 0.08) Spinel Cathodes for Lithium-Ion Batteries", CHEMISTRY OF MATERIALS, Bd. 24, Nr. 15, 14. August 2012 (2012-08-14), Seiten 3101-3109, XP055304177, US ISSN: 0897-4756, DOI: 10.1021/cm301825h

## Beschreibung

### Gebiet der Erfindung

Die vorliegende Erfindung betrifft ein Verfahren zur Herstellung von Lithium-Nickel-Mangan-basierten Übergangsmetalloxidpartikeln, die durch das Verfahren erhältlichen Übergangsmetalloxidpartikel sowie deren Verwendung als Elektrodenmaterial. Insbesondere betrifft die vorliegende Erfindung Lithium-Nickel-Mangan-basierte Übergangsmetalloxidpartikel in überlithiierter Form mit hoher Klopfdichte, ein Verfahren zu deren Herstellung sowie deren Verwendung als Kathodenmaterial in Lithiumakkumulatoren.

### Hintergrund der Erfindung

Für die Anwendung von Lithium-Ionenbatterien ist die Erhöhung der Energiedichte ein wesentliches Optimierungsziel. Auf Materialebene bestimmen Arbeitspotential und spezifische Kapazität die Energiedichte. Auf Zellebene wird zudem die Packungsdichte der Aktivmaterialpulver bedeutsam.

Die typischerweise als Kathodenaktivmaterial in kommerziellen Lithiumionenzellen eingesetzten Schichtoxide Lithiumcobaltoxid LiCoO₂ (LCO), LiNi_{1/3}Mn_{1/3}Co_{1/3}O₂ (NMC) sowie LiNi_{0,85}Co_{0,10}Al_{0,05}O₂ (NCA) erreichen spezifische Kapazitätswerte zwischen 150 und 180 mAh/g, der Lithiummanganspinell LiMn₂O₄ (LMO) wird mit praktischen Werten um 110 mAh/g eingesetzt.

### - Lithium-Nickel-Mangan-Hochvoltspinelle

Mangan- und lithiumreiche Schichtoxide des Typs xLi₂MnO₃·(1-x)LiMO₂ (mit M typischerweise Ni, Co und Mn) werden als vielversprechende Materialien der nächsten Generation entwickelt, befinden sich aber noch nicht in der Anwendung. Im Vergleich zu den bislang kommerziell eingesetzten Materialien erreichen diese deutlich höhere spezifische Kapazitätswerte von 250 - 280 mAh/g. Allerdings werden diese Spitzenwerte nur bei niedrigen Stromraten erzielt. Bereits bei einer moderaten Stromrate von 1C, fallen die Kapazitätswerte unter 180 mAh/g und kommen in den Bereich der bereits kommerziell eingesetzten Schichtoxide. Zudem enthalten sie das teure Element Kobalt. Ein weiterer deutlicher Nachteil dieser Materialklasse ist ihre strukturelle Instabilität: bei fortschreitendem Zyklen wandelt sich die Schichtstruktur in eine zunehmend in spinellartige Struktur um, was zu einer signifikanten Absenkung des Arbeitspotentials und damit zu einem Verlust an Energiedichte führt. Lösungsansätze sind noch nicht gefunden.

Lithium-Nickel-Mangan-basierte Übergangsmetalloxidpartikel vom Spinelltyp (LNMS) sind daher vielversprechende Elektrodenmaterialien in Lithiumionen-Batterien. Sie zeichnen sich insbesondere durch eine hohe Spannungsstufe von 4,7 V vs. Li/Li⁺ aus. Das Redoxprinzip der elektrochemischen Umsetzung lässt sich an den Verbindungen der Formel Li_{1,0}NiₓMn₂₋ₓO_{4-δ} beschreiben. Pro Formeleinheit kann ein Elektron/Lithium-Ion ausgetauscht werden, was einer spezifischen Kapazität von 147 mAh/g entspricht. Aus stöchiometrischer Sicht können sowohl der Nickelgehalt x als auch der Sauerstoffgehalt δ variiert werden. Die Verteilung der formalen Oxidationsstufen und die resultierende elektrochemische Spannungskurve der Materialien wird durch die Formel Li[Ni^{(II)}ₓMn^{(III)}_{1-2x+2δ}Mn^{(IV)}_{1+x-2δ}]O_{4-δ} beschrieben. Abhängig von x und δ können zwei Spannungsplateaus auftreten: a) ein Plateau bei 4,1 V vs. Li/Li⁺ dass dem Mn(III)/Mn(IV)-Redoxpaar zugeordnet werden kann, mit einer Ausnutzung von (1-2x+δ) Elektronen/Lithiumionen pro Formeleinheit; b) ein Plateau bei 4,7 V vs. Li/Li⁺ für den Ni(II)/(IV)-Redoxprozess mit einer Ausnutzung von (2x-2δ) Elektronen/Lithiumionen pro Formeleinheit. Die vollständig substituierte Phase Li[Ni^{(II)}_{0,5}Mn^{(IV)}_{1,5}]O_{4,0} wird erhalten bei x=0.5 und δ=0, mit einem einzigen Spannungsplateau bei 4,7 V vs. Li/Li⁺.

Die Arbeitsspannung des LNMS liegt weit über der kommerziell eingesetzter Materialien und trägt damit proportional zur Steigerung der Energiedichte der Zelle ein. Um den Energiedichtebeitrag des LNMS in der Batteriezelle voll ausschöpfen zu können, müssen die verwendeten Materialien möglichst dicht in der Zelle gepackt werden können. Dafür ist insbesondere eine hohe Pulverdichte erforderlich. Es ist daher von Bedeutung, die Materialien so herzustellen, dass sie eine hohe Pulverdichte und eine geeignete Form- und Größenverteilung aufweisen. Gleichzeitig muss der Herstellprozess kostengünstig und einfach sein.

### - Herstellverfahren für Lithium-Nickel-Mangan-Hochvoltspinelle

Im Stand der Technik werden verschiedene Herstellverfahren für Lithium-Nickel-Mangan-Hochvoltspinelle beschrieben.

Bei der ***Sol-Gel Synthese*** werden aus löslichen Reaktanden kolloidale Dispersionen erzeugt, sogenannte Sole, die durch Alterung in festes dreidimensionales Netzwerk, das Gel, übergehen. Das Gel ist eine chemische Vorstufe des Produkts. Die Produkte weisen eine geringe Kristallitgröße auf, was die Strombelastbarkeit erhöht und daher erwünscht ist. Gleichzeitig besitzen sie eine große Oberfläche, die, insbesondere bei Hochvoltanwendungen, die unerwünschten auftretende Nebenreaktionen befördert. Die Herstellmethode ist jedoch sehr teuer. Ihre Skalierung auf technische Maßstäbe ist daher nicht sinnvoll. Die Methode findet ihren Einsatz daher in der Regel im rein wissenschaftlich-experimentellen Bereich.

Es werden daneben reine ***Festkörpersynthesevarianten*** beschrieben, die verschiedentlich in der Produktion von Batteriematerialien eingesetzt werden. Sie sind insbesondere auch bei der technischen Herstellung von LiCoO₂ als Kathodenmaterial von Bedeutung. Bei dem Verfahren werden Oxide, Carbonate oder andere kristalline Ausgangsverbindungen miteinander vermischt und anschließend thermisch behandelt. Die eingesetzten Partikel haben in der Regel eine hohe Dichte und geringe Porosität. Es ist erforderlich, die Reaktanden einzeln oder miteinander vermahlen, um die Partikelgröße zu verringern, eine möglichst homogene Verteilung der Partikel im Gemisch zu gewährleisten um auf diese Weise die Diffusionswege im Kalzinierungsschritt zu verkürzen. Die eingesetzten Partikel sind im Gegensatz zum Sol-Gel-Verfahren in der Regel von mikroskopischer Größe, die Diffusionswege für die Reaktion sind daher vergleichsweise lang. Um die Umsetzung zu beschleunigen und zu vervollständigen werden die Reaktionen bei hohen Temperaturen durchgeführt, die beim LNMS 800°C bis 900°C betragen können. Für den LNMS sind Kalzinierungstemperaturen ein kritischer Parameter: der Nickel-Mangan-Spinell neigt dazu, bei Temperaturen oberhalb von 700°C Sauerstoff aus dem Gitter abzugeben. Dabei bilden sich sauerstoffdefizitäre Phasen wobei Nickeloxid NiO als separate Phase aus dem Gitter ausgeschieden werden kann. Allerdings ist dieser Prozess reversibel. Schließt man einer Hochtemperaturkalzinierung einen Ausheilungsprozess bei 700°C an, so kann sich das NiO wieder im Gitter lösen und die Sauerstofffehlstellen heilen aus. Auf diese Weise lässt sich die gewünschte Zielstöchiometrie auf kristalliner Ebene wieder einstellen.

Aus technischer Sicht ist dieser Ausheilungsprozesse jedoch zeit- und damit kostenintensiv, wenn nicht Störstellen im Gitter zurückbleiben sollen, die das elektrochemische Verhalten beeinträchtigen. Die so erhaltenen Proben erreichen höhere Dichten als solche aus dem Sol-Gel-Prozess, sie weisen eine geringere spezifische Oberfläche auf. Anschließend werden Mahlprozesse erforderlich, um die Materialien auf die gewünschte Partikelgrößenspezifikation einzustellen, die wiederum den technischen Prozess verteuern. Zudem ist ein Eintrag von Verunreinigungen beim Mahlprozess ist nicht auszuschließen.

Bei beiden beschriebenen Methoden Sol-Gel- und Festkörpersynthese müssen hoch-reine Ausgangsmaterialien eingesetzt werden. Die hohen Anforderungen an Qualität und Reinheit der Rohmaterialien erhöhen die Kosten für die Bereitstellung der Rohmaterialien.

Neben diesen Methoden sind ***kombinierte Verfahren*** beschrieben, bei denen durch Präzipitation ein Präkursor, z.B. ein Übergangsmetallcarbonat, -oxid oder -hydroxid, hergestellt wird, der anschließend mit stöchiometrischen Mengen einer Lithiumverbindung zum Endprodukt umgesetzt wird. Die Reinheitsanforderungen an die Edukte sind bei diesem Verfahren weniger hoch, da lösliche Verunreinigungen im Filtrations- und Waschprozess des Präzipitats herausgewaschen werden und somit nicht im Produkt verbleiben. Auch für die Klasse der LNMS sind solche sphärischen Materialien beschrieben. Die maximalen erzielten Pulverdichten der Produkte sind jedoch gering.

Wang et al. (Journal of Power Sources, 274 (2015) 451-457) beschreiben an Hand eines Parameterscreenings, dass durch Fällungen von Hydroxiden der Zusammensetzung Ni_{0,25}Mn_{0,75}(OH)₂ in Gegenwart von NH₃ Klopfdichten im Bereich von 0,7 - 1,5 g/cm³ erhalten werden können. Die Sekundäragglomerate sind aus plättchenförmigen Primärkristalliten aufgebaut, die kartenhausähnlich im Korn angeordnet sind. Diese Anordnung führt zur Ausbildung entsprechender Hohlräume im Korn, welche die geringen Klopfdichtewerte erklären. Um solche Partikel zu dichten Körnern zu sintern, müssten hohe Temperaturen angewandt werden; Kristallitwachstum und unerwünschte Segregation von NiO wären wiederum die Folge.

### - Überlithiierte Übergangsmetalloxide

Für den Einsatz in Batteriezellen ist es regelmäßig erforderlich, dass bei der Assemblierung die positive und die negative Elektrode den gleichen Ladezustand haben. Möchte man das Aktivmaterial in Form von Li[Ni^{(II)}_{0,5}Mn^{(IV)}_{1,5}]O_{4,0} einsetzen und auch die lithiumreichen Phasen mitnutzen, so kann die Gegenelektrode zum Beispiel durch Vorlithiierung auf den gleichen Ladezustand gebracht werden. In diesem Fall würden beide Elektroden in teilgeladenem Zustand assembliert.

Ist eine Vorlithiierung der Anode auf Grund technischer Gegebenheiten nicht einfach umsetzbar, so kann es hilfreich sein, das Material für den Zellbau bereits in überlithiierter Form Li₁₊ₓ[Ni^{(II)}_{0,5}Mn^{(IV)}_{1,5}]O_{4,0} (0 < x < 1,5) bereitzustellen. In diesem Fall ist eine Vorlithiierung der negativen Elektrode nicht erforderlich und die Assemblierung findet in vollständig entladenem Zustand statt. Das überlithiierte Material Li₁₊ₓ[Ni^{(II)}_{0,5}Mn^{(IV)}_{1,5}]O_{4,0} kann vorteilhaft auch als Additiv in Zellen mit Anodenmaterialien wie zum Beispiel Silicium, amorphem Kohlenstoff oder anderen vergleichbaren Materialien eingesetzt werden, die einem hohen irreversiblen Anfangsverlust unterliegen. Hier kann der Lithiumüberschuss x des Kathodenmaterials zur Kompensation der Verluste auf der Anode eingesetzt werden. Nach Kompensation arbeitet das Additiv als Kathodenmaterial auf dem Hochvoltplateau in der Zelle.

Es ist daher von Bedeutung, Materialien bereitzustellen, die eine hohe Kapazität und gute Belastbarkeit haben, und sie gleichzeitig so herzustellen, dass sie hohe Klopfdichten und eine geeignete Form- und Größenverteilung aufweisen. Darüber hinaus ist es wichtig einen Prozess bereitzustellen, mit dem die hochdichten Materialien auf einfachem Wege in ihre überlithiierte Form überführt werden können. Zudem sollten alle Schritte im Herstellungsprozess kostengünstig und technisch einfach umzusetzen sein.

Besonders vielversprechende Elektrodenmaterialien in Lithiumionen-Batterien sind ***überlithiierte Spinelle*** des Typs ***Li₂M₂O₄.*** Deren chemische Herstellung basiert auf der Herstellung eines Spinells der Ausgangszusammensetzung LiM₂O₄. Dieser wird in einem anschließenden Reduktionsprozess in Gegenwart einer Lithiumquelle umgesetzt. Da diese Verbindungen bei höheren Temperaturen Strukturumwandlungen unterliegen, müssen Edukte und Prozessbedingungen so gewählt werden, dass die kritische Temperatur nicht überschritten wird.

Amine et al. (J. Electrochem. Soc., Vol. 143 (1996) No.5, 1607-1613) stellen ein feinteiliges LiNi_{0,5}Mn_{1,5}O₄ über Sol-gel Synthese durch thermische Zersetzung aus entsprechenden Acetaten her. Das erhaltene Produkt wird mit einer Lösung aus Lithiumiodid in Acetonitril umgesetzt. Ein sechsfacher Überschuss von Lithiumiodid ist erforderlich. Die Produktstöchiometrie wird mit Li₂Ni_{0,5}Mn_{1,5}O₄ a ngegeben. Das Arbeitspotential dieses Materials liegt bei 3 V vs. Li/Li⁺. Es wird eine maximale Kapazität von 170 mAh/g erreicht; die Kapazität sinkt innerhalb von 30 Zyklen auf 75% der Ausgangskapazität. Diese Methode weist den Nachteil auf, dass sehr hohe Überschüsse an Lithiumiodid und der Einsatz toxischer Lösungsmittel erforderlich sind. Die benötigte Reaktionszeit von 13 h ist lang, Lösungsmittel und Lithiumiodidüberschuss müssen aufwändig entsorgt werden.

West et al. (Electrochimica Acta, Vol. 45 (2000) 3141-3149) stellen Li₂Mn₂O₄ durch Umsetzung von LiMn₂O₄ in einer Lithiumiodidschmelze dar. Die Reaktion dauert fünf Stunden, die Temperatur beträgt 460°C. Diese Temperatur liegt dicht über dem Schmelzpunkt von Lithiumiodid (446°C). Angaben her Herstellung und zur Spezifikation des Ausgangsmaterials LiMn₂O₄ fehlen. Nickelhaltige Materialien werden nicht beschrieben. In den ersten beiden Zyklen wird etwa 1 Lithium pro Mangan ausgetauscht. Ein 4,7 V Plateau existiert nicht. Angaben zur Zyklenstabilität fehlen.

Peramunage et al. (J. Electrochem. Soc., Vol. 145 (1998) No. 4, 1131-1136) verwenden als Ausgangsverbindung ein Li_{1,1}Mn₂O₄, das durch thermische Umsetzung von MnO₂ mit LiOH erzeugt wird. Für die Lithiierung wird das vorgetrocknete Material in trockenes Hexan eingebracht. Unter heftigem Rühren werden stöchiometrische Mengen einer 2.5 M Lösung aus Butyl-Lithium in Hexan langsam zugegeben. Das entstandene Li₂Mn₂O₄ wird anschließend mit Hexan gewaschen und getrocknet. Elektrochemisch werden 1,4 Li/Mn₂ genutzt, was, bezogen auf Li₂Mn₂O₄, einer spezifischen Kapazität von 198 mAh/g entspricht. Etwa 60% dieser Kapazität werden auf einem Plateau bei 4 V vs. Li/Li⁺ entladen, je 20% der Kapazität dann bei 2,8 V und 2,2 V vs. Li/Li⁺.

Park et al. (Electrochemical and Solid-State Letters, 8 (2005) A163-A167) stellen ein LiNi_{0,5}Mn_{1,5}O₄ über einen Ultraschall-Sprühpyrolyseprozess aus den entsprechenden Metallnitraten her. Die Autoren zeigen, dass LiNi_{0,5}Mn_{1,5}O₄, auf dem 3 V Plateau elektrochemisch zyklisiert werden kann (LiNi_{0,5}Mn_{1,5}O₄ ↔ Li₂Ni_{0.5}Mn_{1,5}O₄). Eine chemische oder elektrochemische Überführung in Li₂Ni_{0,5}Mn_{1,5}O₄ ist nicht beschrieben,

Alle beschriebenen Verfahren zur Lithiierung sind sehr aufwändig. Sie erfordern entweder kritische Reaktionsmittel wie Butyllithium, toxische Lösungsmittel oder hohe Temperaturen und sind daher nicht für eine großtechnische Umsetzung geeignet.

Es besteht somit ein Bedarf an Verfahren zur Herstellung von Lithium-Nickel-Mangan-basierten Übergangsmetalloxidpartikeln, insbesondere überlithiierten Lithium-Nickel-Mangan-basierten Übergangsmetalloxidpartikeln, welche die Nachteile der im Stand der Technik beschriebenen Verfahren überwinden. Insbesondere sollten die erhaltenen Materialien aus kleinen Kristalliten aufgebaut sein, um schnelle Lade-/Entladekinetik zu erlauben; kleine Kristallite erfordern aber zumeist niedrige Umsetzungstemperaturen und die dafür geeigneten Prozesse führen meist nicht zu den erforderlichen Korndichten. Gleichzeitig sollte jedoch die Korndichte der Materialien hoch sein, um hohe Beladungsgrade in den Zellen zu erreichen. Ferner sollte die spezifische Oberfläche niedrig sein um Nebenreaktionen zurückzudrängen, was im Stand der Technik jedoch nur durch Hochtemperaturprozesse erreicht wird.

### Aufgabe der Erfindung

Der Erfindung liegt daher die Aufgabe zugrunde, elektrochemisch hoch aktive und hochkapazitive Lithium-Nickel-Mangan-basierte Übergangsmetalloxidmaterialien, welche eine geringe Kristallitgröße und gleichzeitig hohe Pulverdichte aufweisen, sowie ein einfaches, kostensparendes und effizientes Verfahren zu deren Herstellung bereitzustellen.

### Zusammenfassung der Erfindung

Die Aufgabe wird gelöst durch Bereitstellung eines Verfahrens zur Herstellung von Lithium-Nickel-Mangan-basierten Übergangsmetalloxidpartikeln gemäß Anspruch 1, die Bereitstellung eines Verfahrens zur Herstellung von überlithiierten Lithium-Nickel-Mangan-basierten Übergangsmetalloxidpartikeln gemäß der Ansprüche 8 und 11, die durch diese Verfahren hergestellten Materialien gemäß der Ansprüche 12 und 13 sowie deren Verwendungen als Elektrodenmaterial gemäß Anspruch 14. Bevorzugte beziehungsweise besonders zweckmäßige Ausgestaltungen der Erfindung sind in den Unteransprüchen angegeben.

### Kurze Beschreibung der Figuren

Figur 1a, b: Darstellung der erhaltenen Partikelmorphologie in Abhängigkeit des Edukteintrags (a: Übersicht im Kennfeld, b: Übersicht der Morphologie).
Figur 2: Röntgendiffraktogramm eines lithiumfreien Übergangsmetallpräkursors.
Figur 3: Röntgendiffraktogramm von erfindungsgemäß hergestellten lithiumhaltigen Übergangsmetalloxidpartikeln nach Kalzinierung über 3h bei 350°C und nach Kalzinierung über 10h bei 700°C.
Figur 4: Steuerbarkeit der Kristallitgröße durch den Einfluss der Kalzinierungstemperatur.
Figur 5: Kornformverteilung und Verteilung von Kristallitformen von erfindungsgemäß hergestellten Übergangsmetalloxidpartikeln.
Figur 6a, b: Übersicht der Partikelmorphologie der Ausführungsbeispiele in Abhängigkeit der Konzentrationen an NH₃ und NH₄⁺ in der Mutterlauge nach Fällung des Übergangsmetallpräkursors (a: Übersicht im Kennfeld, b: Übersicht der Morphologie).
Figur 7: SEM-Aufnahmen der Partikel des in Beispiel 1 erhaltenen überlithiierten Produkts.
Figur 8: Röntgendiffraktogramm des in Beispiel 1 erhaltenen überlithiierten phasenreinen Produkts.
Figur 9: Elektrochemische Stabilität und Belastungsverhalten einer mit erfindungsgemäß hergestellten Übergangsmetalloxidpartikeln bandbeschichteten Elektrode.
Figur 10: Potentialverläufe des in überlithiierter Form eingesetzten Li₁₊ₓNi_{0.5}Mn_{1.5}O₄, erster Vollzyklus bei Nutzung beider Potentialstufen.
Figur 11: Potentialverläufe des in überlithiierter Form eingesetzten Li₁₊ₓNi_{0,5}Mn_{1,5}O₄ der Vollzyklen 5, 10 und 20.
Figur 12: Zyklenverhalten des in chemisch überlithiierter Form eingesetzten Li₁₊ₓNi_{0,5}Mn_{1,5}O₄
Figur 13: Spezifische Kapazität eines erfindungsgemäßen überlithiierten Materials nach elektrochemischer Überlithiierung.
Figur 14: Potentialverläufe bei Verwendung des erfindungsgemäßen überlithiierten Materials als Elektrodenzusatz zum Elektrodenkomposit in der Halbzelle.
Figur 15: Zyklenverhalten des Elektrodenkomposits in der Halbzelle.
Figur 16: Kompensation der irreversiblen Anodenverluste durch Verwendung des Elektrodenkomposits in der Vollzelle.

### Detaillierte Beschreibung der Erfindung

Es konnte in der vorliegenden Erfindung überraschend gefunden werden, dass die Nachteile des Stands der Technik durch Bereitstellung eines Verfahrens gelöst werden können, in dem in einem ersten Schritt ein lithiumfreier Übergangsmetallpräkursor aus einer wässrigen Lösung von Übergangsmetallsalzen durch Zugabe eines Alkalimetallhydroxids und NH₃ ausgefällt wird, wobei das Alkalimetallhydroxid im Verhältnis zum Gesamtgehalt an Übergangsmetallionen in der Reaktionsmischung unterstöchiometrisch eingesetzt wird. Durch Zugabe an NH₃ zu der Reaktionsmischung wird trotz des unterstöchiometrischen Einsatzes an Hydroxidionen (OH⁻-Ionen) eine vollständige Fällung erzielt. Insbesondere ist es notwendig, dass die erhaltene Konzentration an Ammoniumionen (NH₄⁺-Ionen) in der Reaktionsmischung nach Einstellung eines chemischen Gleichgewichts 0,05 mol/l oder mehr beträgt. Hierdurch kann ein lithiumfreier Übergangsmetallpräkursor mit sphärischer oder sphäroider Partikelmorphologie und gleichzeitig hoher Klopfdichte erhalten werden, wobei diese Partikeleigenschaften auch in den nachfolgenden Verfahrensstufen erhalten bleiben bzw. sogar noch verbessert werden. Besonders vorteilhaft zur Erzielung einer optimalen Partikelmorphologie ist somit die Einstellung eines wie im folgenden beschriebenen Verhältnisses an NH₄⁺-Ionen zu NH₃ in der Reaktionsmischung nach Einstellung eines chemischen Gleichgewichts der Fällungsreaktion.

Die vorliegende Erfindung betrifft somit ein Verfahren zur Herstellung von Übergangsmetalloxidpartikeln der allgemeinen Formel (1):

LiMn_{1,5+y}Ni_{0,5-y-z}M_{z}O₄ (1),

wobei M ein oder mehrere Elemente aus Co, Mg, Fe und Zn umfasst,
y ein Wert von 0 bis kleiner 0,5 ist,
z ein Wert von 0 bis 0,1 ist, und
(y+z) ein Wert kleiner 0,5 ist,
das Verfahren umfassend die Schritte:
(a) Umsetzung einer wässrigen Lösung von Mangansalzen, Nickelsalzen und optional von einem oder mehreren weiteren Salzen der Elemente Co, Mg, Fe und Zn mit einer wässrigen Lösung eines Alkalimetallhydroxids und NH₃, um einen lithiumfreien Übergangsmetallpräkursor aus der Reaktionsmischung auszufällen,
   wobei das molare Anfangsverhältnis von OH⁻-Ionen zu Metallionen (OH⁻ : M²⁺) < 1,95 und
   wobei die Konzentration an NH₄⁺-Ionen in der Reaktionsmischung nach Einstellung eines chemischen Gleichgewichts 0,05 mol/l oder mehr beträgt,
(b) Isolierung und optional Trocknung des ausgefällten lithiumfreien Übergangsmetallpräkursors aus der Reaktionsmischung,
(c) Umsetzung des lithiumfreien Übergangsmetallpräkursors mit einer wässrigen Lösung einer thermisch zersetzbaren Lithiumverbindung, um einen lithiumhaltigen Übergangsmetallpräkursor zu erhalten, und
(d) Kalzinierung des lithiumhaltigen Übergangsmetallpräkursors bei einer Temperatur von 300°C-800°C.

Gemäß dem Verfahren der vorliegenden Erfindung verläuft die Herstellung der hochdichten und hochkapazitiven erfindungsgemäßen Materialien somit über verschiedene Zwischenstufen (a) bis (d) sowie gegebenenfalls (e). Hierbei wird im Verfahrensschritt (a) zunächst eine hochdichte lithiumfreie Vorstufe (lithiumfreier Präkursor) hergestellt, welche nachfolgend im Verfahrensschritt (b) isoliert und gegebenenfalls getrocknet wird. Die lithiumfreie Vorstufe wird dann im Schritt (c) durch Umsetzung mit einer thermisch zersetzbaren lithiumhaltigen Verbindung in eine hochdichte lithiumhaltige Vorstufe (lithiumhaltiger Präkursor) überführt. Die erfindungsgemäßen Übergangsmetalloxidpartikel werden anschließend durch Kalzinierung der lithiumhaltigen Vorstufe in Schritt (d) erhalten.

Zur Herstellung von überlithiierten Übergangsmetalloxidpartikeln werden die Übergangsmetalloxidpartikel, insbesondere die in Schritt (d) erhaltenen lithiumhaltigen Übergangsmetalloxidpartikel, in einer Festphasenreaktion durch Umsetzung mit einer lithiumhaltigen Verbindung in Gegenwart eines Reduktionsmittels umgesetzt.

### Verfahrensschritt (a): Herstellung eines lithiumfreien Übergangsmetallpräkursors

Verfahrensschritt (a) des erfindungsgemäßen Verfahrens umfasst insbesondere die Umsetzung einer wässrigen Lösung von Mangansalzen, Nickelsalzen und optional weiteren wie im Folgenden beschriebenen Salzen mit einer wässrigen Lösung eines Alkalimetallhydroxids und NH₃, um einen lithiumfreien Übergangsmetallpräkursor aus der Reaktionsmischung auszufällen, wobei die Konzentration an NH₄⁺-Ionen in der Reaktionsmischung nach Einstellung eines chemischen Gleichgewichts 0,05 mol/l oder mehr beträgt.

Die chemische Gesamtgleichung der Fällungsreaktion kann wie folgt dargestellt werden:

Me(II) + (2-y)OH⁻ + xNH₃ + yH₂O → Me(II)(OH)₂ + (x-y)NH₃ + yNH₄⁺

Hierbei sind x und y so zu wählen, dass die hierin beschrieben Konzentrationen an NH₃ + NH₄⁺ erhalten werden.

Der lithiumfreie Übergangsmetallpräkursor wird somit über einen Fällungsprozess aus einer wässrigen Lösung von Mangansalzen, Nickelsalzen sowie optional weiteren Salzen der Elemente Co, Mg, Fe, Zn, sowie gegebenenfalls Al, V, Cr, Ti, Cu, Be, Ca, Sr, Ba und La hergestellt. Durch Einstellung einer entsprechenden Stöchiometrie der Edukte können so lithiumfreie Übergangsmetallpräkursoren der allgemeinen Formel (3) erhalten werden:

Mn_{1,5+y}Ni_{0,5-y-z}M_{z}O₄H₄ (3)

M ist insbesondere ausgewählt aus einem oder mehreren der Elemente Co, Mg, Fe und Zn, sowie weiter optional ferner Al, V, Cr, Ti, Cu, Be, Ca, Sr, Ba und La, y ist ein Wert von 0 bis kleiner 0,5, z ist ein Wert von 0 bis 0,1 und (y+z) ist ein Wert kleiner 0,5. In einer bevorzugten Ausführungsform ist y von 0 bis 0,2, besonders bevorzugt von 0 bis 0,1.

In einer bevorzugten Ausführungsform beträgt die Konzentration an NH₃ in der Reaktionsmischung nach Einstellung eines chemischen Gleichgewichts 0,01 bis 1,0 mol/l. Insbesondere durch das Verhältnis der Konzentration an NH₄⁺-Ionen in der Reaktionsmischung nach Einstellung eines chemischen Gleichgewichts von 0,05 mol/l oder mehr in Kombination mit der Konzentration an NH₃ von 0,01 bis 1,0 mol/l kann eine vorteilhafte sphärische oder sphäroide Kornform bei gleichzeitig hoher Klopfdichte erhalten werden.

Bevorzugt beträgt nach Einstellung eines chemischen Gleichgewichts die Konzentration an NH₄⁺-Ionen in der Reaktionsmischung von 0,07 bis 0,25 mol/l, besonders bevorzugt 0,08 bis 0,20 mol/l.

Bevorzugt beträgt nach Einstellung eines chemischen Gleichgewichts die Konzentration an NH₃ in der Reaktionsmischung von 0,05 bis 0,75 mol/l, besonders bevorzugt 0,07 bis 0,5 mol/l, insbesondere bevorzugt 0,1 bis 0,3 mol/l, wobei Kombinationen mit den zuvor aufgeführten Konzentration an NH₄⁺-Ionen in der Reaktionsmischung besonders bevorzugt sind.

Alternativ kann die nach Einstellung eines chemischen Gleichgewichts erhaltene Konzentration an NH₄⁺-Ionen sowie der Konzentration an NH₃ in der Reaktionsmischung auch durch Vorgabe von entsprechenden Edukteinträgen definiert werden. Hierbei ergeben sich die zuvor beschriebenen Konzentration an NH₄⁺-Ionen sowie der Konzentration an NH₃ in der Reaktionsmischung nach Einstellung eines chemischen Gleichgewichts durch das molare Anfangsverhältnis von OH⁻ -Ionen zu Metallionen (OH⁻ : M²⁺) sowie durch das molare Anfangsverhältnis ([OH⁻ + NH₃] : M²⁺).

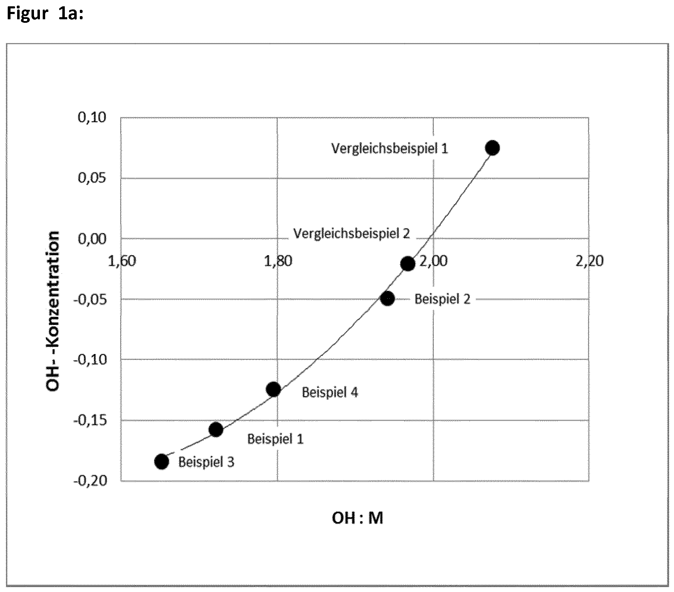

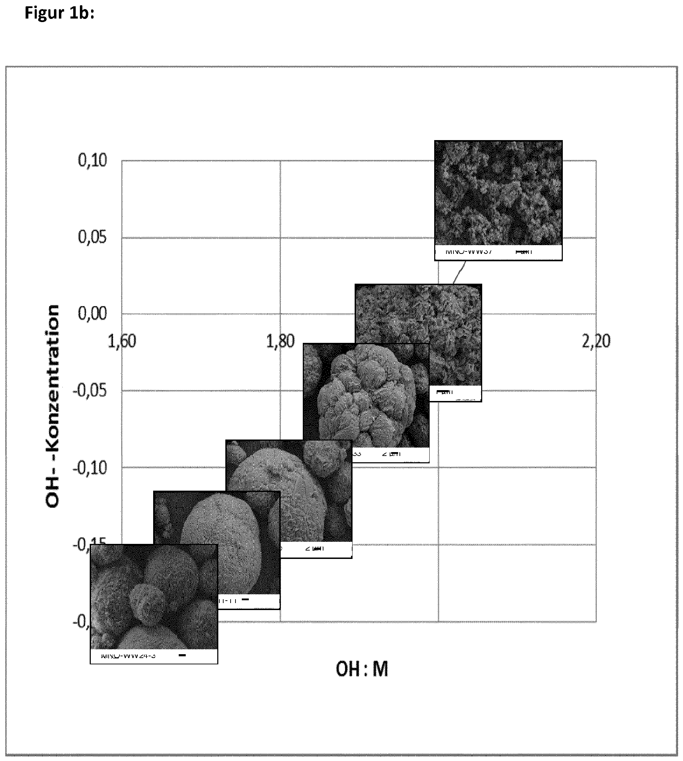

Das molare Anfangsverhältnis von OH⁻ -Ionen zu Metallionen (OH⁻ : M²⁺) ist < 1,95, bevorzugt zwischen 1,5 und 1,9. Um trotz dieses unterstöchiometrischen Einsatzes von OH⁻ -Ionen eine vollständige Fällung zu erzielen, wird der Reaktionsmischung NH₃ in einer Menge zugegeben, dass das molare Verhältnis ([OH⁻ + NH₃] : M²⁺) > 2 ist, bevorzugt von 2,1 bis 2,5. Der Einfluss des molaren Anfangsverhältnisses von OH⁻ -Ionen zu Metallionen auf die Partikelmorphologie von nach dem erfindungsgemäßen Verfahren hergestellten Übergangsmetalloxidpartikeln ist in Figur 1 anhand von Ausführungsbeispielen dargestellt. Die Ausfällung des lithiumfreien Übergangsmetallpräkursors aus der Reaktionsmischung erfolgt durch Zugabe eines Alkalimetallhydroxids. Das Alkalimetallhydroxid ist insbesondere ausgewählt aus Natriumhydroxid (NaOH), Kaliumhydroxid (KOH), Lithiumhydroxid (LiOH) oder Mischungen davon, wobei Natriumhydroxid bevorzugt ist.

Die in Schritt (a) eingesetzten Salze sind nicht besonders beschränkt, solange die Salze eine gute wässrige Löslichkeit aufweisen. Bevorzugt sind Nitrate und Sulfate, besonders bevorzugt Nitrate, wobei auch Mischungen von Nitraten, Sulfaten oder ggf. anderen Salzen möglich sind.

Die Umsetzung in Schritt (a) kann in einem beliebigen Reaktionsgefäß bzw. Reaktor erfolgen. Die Reaktionsdurchführung kann somit stationär, semi-kontinuierlich oder kontinuierlich betrieben werden. Bevorzugt ist die Reaktionsführung in einem kontinuierlich betrieben Reaktor, wie beispielsweise einem kontinuierlich betriebenen Rührreaktor. Die Durchführung in einem kontinuierlich betrieben Reaktor ermöglicht in besonders effizienter Weise die Einstellung von konstanten Volumenströmen, um die gewünschte Produktstöchiometrie zu erhalten. Insbesondere ermöglicht die Durchführung in einem kontinuierlich betrieben Reaktor die einfache Einstellung von Reaktionsparametern, wie beispielsweise Temperatur, Rührdrehzahl und Verweilzeit, um so gegebenenfalls den Verlauf der Fällungsreaktion beeinflussen können. Hierdurch kann in besonders effizienter Weise ein chemisch definiertes Produkt mit vorteilhaften Eigenschaften wie Partikelmorphologie und Klopfdichte erhalten werden. Ferner kann die Bestimmung der Konzentration an NH₄⁺-Ionen sowie an NH₃ in der Reaktionsmischung aus der Mutterlauge nach Abtrennung des Feststoffs erfolgen, und somit auch während des Betriebs des Reaktors.

Die Reaktionstemperatur, insbesondere bei Reaktionsdurchführung in einem kontinuierlich oder semikontinuierlich betriebenen Reaktor, liegt üblicherweise bei 35-90°C, ferner bevorzugt bei 45 bis 75°C, und besonders bevorzugt bei 55 bis 65°C.

Insbesondere bei Reaktionsdurchführung in einem kontinuierlich oder semikontinuierlich betriebenen Reaktor ist es notwendig, vor der Bestimmung der Konzentration an NH₄⁺-Ionen und an NH₃ in der Reaktionsmischung die Einstellung eines chemischen Gleichgewichts abzuwarten. Die Einstellung des chemischen Gleichgewichts erfolgt üblicherweise innerhalb von 6 Verweilzeiten, was je nach Größe und Anordnung des Reaktors sowie Zugabevolumen einem Zeitraum von 6 bis 18 h, insbesondere 10 bis 14h entspricht. Die Verweilzeit ist definiert durch die Zeitdauer, in der ein definiertes Flüssigkeitsvolumen in einem Reaktor verbleibt, d.h. "verweilt". Verfügt der Reaktor über ein Volumen von x Litern, dann entspricht die Verweilzeit der Zeit, in der x Liter an Gesamtausgangslösungen zugegeben wurden, d.h. in der das Reaktorvolumen durch den Zustrom an Eduktlösungen einmal ausgetauscht wurde, wobei eventuell auftretende Rückvermischungen unberücksichtigt sind. Bei einer üblichen Gleichgewichtseinstellung in 6 Verweilzeiten entsprechen somit 6 h Gleichgewichtseinstellung einer Verweilzeit von 1 h und 18 h Gleichgewichtseinstellung entsprechen einer Verweilzeit von 3 h.

Übliche Rührgeschwindigkeiten betragen, je nach Art und Größe des verwendeten Reaktors und Rührers, zwischen 200 und 1500 U/min, insbesondere zwischen 500 und 1000 U/min.

Die molaren Konzentrationen der eingesetzten Edukte sind üblicherweise so gewählt, dass die erhaltenen Feststoffgehalte zwischen 5 und 20 Gew.%, bevorzugt zwischen 10 und 15 Gew.%, bezogen auf das Gesamtgewicht der Reaktionsmischung, beträgt, wobei der maximale Feststoffgehalt von etwa 20 Gew.% von den Sättigungskonzentrationen der Eduktlösungen begrenzt ist.

Die Fällungsreaktion in Schritt (a) erfolgt üblicherweise unter Schutzgasatmosphäre, wie beispielsweise unter Stickstoffatmosphäre oder Argonatmosphäre. Eine Aufarbeitung unter Luft kann zur Anoxidation der Materialien führen. Die Anwesenheit von Sauerstoff kann bei der Fällungsreaktion insbesondere die Schichtstruktur der gebildeten Partikel stören. Hierdurch können fehlgeordnete Strukturen mit verändertem Diffraktogramm entstehen, was aber üblicherweise keinen negativen Einfluss auf die Qualität des erfindungsgemäßen Produkts hat.

Die erhaltenen lithiumfreien Präkursoren fallen üblicherweise als gut isolierbarer, beispielsweise filtrierbarer, Niederschlag an. Die erhaltenen lithiumfreien Präkursoren zeichnen sich dabei durch eine sphärische oder sphäroide Wachstumsstruktur der Primärkristallite aus. Die Präkursoren können insbesondere Klopfdichten von 2.0 g/cm³ oder mehr aufweisen. Entscheidend für die hohe Dichte ist, dass die Ausbildung plättchenförmiger Kristallite begrenzt wird und sich bevorzugt dreidimensionale im Korn dicht gepackte Kristallite ausbilden. Die erfindungsgemäßen Materialien zeichnen sich insbesondere dadurch aus, dass die Kristallite zu großem Teil aus kantigen dreidimensionalen Kristallen aufgebaut sind, die von rhomboedrischer oder ähnlicher Gestalt sind. Strukturell handelt es sich bei den ausgefällten Partikeln üblicherweise um ein Mischhydroxid mit Brucitstruktur, wie unter Stickstoff aufgearbeitete Proben zeigen.

Die Partikelgrößen der lithiumfreien Präkursoren können zwischen 1 µm und 40 µm liegen. Die Form kann von sphärischer oder sphäroidischer Morphologie sein, oder kantige Formen aufweisen. Die Diffusionswege von der Oberfläche bis zur Mitte der größten Partikel liegen typischerweise bei bis zu 20 µm.

### Verfahrensschritt (b): Isolierung und optional Trocknung des lithiumfreien Übergangsmetallpräkursors

Im Schritt (b) des erfindungsgemäßen Verfahrens erfolgt üblicherweise eine Isolierung sowie optional eine Trocknung des in Schritt (a) ausgefällten lithiumfreien Übergangsmetallpräkursors aus der Reaktionsmischung. Die Isolierung kann durch übliche Techniken, wie beispielsweise Filtration, beispielsweise durch Verwendung einer Saugnutsche, oder Zentrifugation erfolgen, wodurch der erhaltene Feststoff von der Mutterlauge abgetrennt wird. Der erhaltene Feststoff wird üblicherweise gewaschen, beispielsweise mit demineralisiertem Wasser, und anschließend getrocknet. Die Trocknung kann in einem üblichen Ofen, beispielsweise in einem Muffelofen, erfolgen. Die Temperaturen betragen meist zwischen 50 und 150°C, bevorzugt zwischen 80 und 130°C.

Es wird typischerweise ein getrocknetes Pulver erhalten, das jedoch auch noch Restfeuchte enthalten kann.

In einer bevorzugten Ausführungsform erfolgt die Trocknung in Schritt (b) unter nicht-oxidierender Atmosphäre, beispielsweise unter Stickstoffatmosphäre oder Argonatmosphäre.

### Verfahrensschritt (c): Herstellung eines lithiumhaltigen Übergangsmetallpräkursors

Verfahrensschritt (c) des erfindungsgemäßen Verfahrens umfasst die Umsetzung des in Schritt (b) erhaltenen lithiumfreien Übergangsmetallpräkursors mit einer wässrigen Lösung einer thermisch zersetzbaren Lithiumverbindung. Hierdurch kann ein lithiumhaltiger Übergangsmetallpräkursor erhalten werden.

Um Übergangsmetalloxidpartikel der zuvor genannten allgemeinen Formel (1) zu erhalten, ist es insbesondere notwendig, dass die hierbei eingesetzte Lithiumverbindung thermisch zersetzbar ist, wobei thermisch zersetzbar bedeutet, dass die Lithiumverbindung durch Erhitzen in Lithiumoxid überführbar ist, ohne dass weitere, bei Raumtemperatur feste Nebenprodukte erhalten werden. Derartige thermisch zersetzbare Lithiumverbindungen umfassen insbesondere Lithiumhydroxid (LiOH), Lithiumcarbonat (LiCO₃) und Lithiumnitrat (LiNO₃). Aufgrund der thermischen Zersetzbarkeit und guten Wasserlöslichkeit ist Lithiumhydroxid als Lithiumverbindung bevorzugt.

Die Art der Umsetzung ist nicht besonders beschränkt. Üblicherweise wird der in Schritt (b) erhaltene lithiumfreie Übergangsmetallpräkursor mit einer wässrigen Lithiumhydroxidlösung vermischt, und die hierdurch erhaltene Suspension zur trockne eingedampft. Es findet hierdurch eine Imprägnierung des lithiumfreien Übergangsmetallpräkursor mit Lithiumhydroxid statt. Der Übergangsmetallpräkursor wird anschließend gegebenenfalls getrocknet, wobei im erhaltenen Produkt jedoch noch Restfeuchte enthalten sein kann. Die Menge an Lithiumhydroxidlösung wird üblicherweise so gewählt, dass das atomare Verhältnis von Li zu (Mn + Ni) etwa 0,5 beträgt.

### Verfahrensschritt (d): Herstellung von lithiumhaltigen Übergangsmetalloxidpartikeln

Verfahrensschritt (d) des erfindungsgemäßen Verfahrens umfasst insbesondere die Kalzinierung des in Schritt (c) erhaltenen lithiumhaltigen Übergangsmetallpräkursors bei einer Temperatur von 300°C-800 °C, bevorzugt bei einer Temperatur von 500-750 °C. Die Kalzinierung erfolgt unter sauerstoffhaltiger Atmosphäre, bevorzugt an Luftsauerstoff, um so die Umsetzung der Hydroxide zum Oxid zu ermöglichen. Gegebenenfalls kann die Kalzinierung auch unter angereichertem Sauerstoff oder unter reinem Sauerstoff erfolgen. Gegebenenfalls kann vor der Kalzinierung eine Vortrocknung bei Temperaturen von 80 °C bis 200 °C erfolgen. Ferner kann vor Kalzinierung des in Schritt (c) erhaltenen lithiumhaltigen Übergangsmetallpräkursors eine Homogenisierung des Pulvers erfolgen, beispielsweise unter Verwendung einer Pulvermühle.

Die Kalzinierung in Schritt (d) kann in einer, zwei oder mehreren Stufen erfolgen. Bevorzugt erfolgt die Kalzinierung in zwei Stufen, wobei zunächst bei einer niedrigen Temperatur, beispielsweise von 300 °C bis 450 °C kalziniert wird, gefolgt von einer zweiten Stufe bei höherer Temperatur, beispielsweise von 450°C bis 700°C. Die Kalzinierung erfolgt üblicherweise über einen Zeitraum von 2 bis 24 h, bevorzugt von 4 bis 12 h. Bei einer zwei oder mehrstufigen Kalzinierung erfolgt die erste Stufe (Vorkalzinierung) bei niedriger Temperatur beispielsweise für 2h bis 4 h und die zweite oder weitere Stufe (Endkalzinierung) bei höherer Temperatur für 4 bis 20 h, beispielsweise für 10 bis 14 h.

Aufgrund weiter Diffusionswege und hoher Dichte der Partikel sind bei Festkörperreaktionen üblicherweise hohe Temperaturen für eine vollständige Umsetzung erforderlich. Überraschenderweise konnte jedoch für die erfindungsgemäßen Partikel gezeigt werden, dass trotz hoher Dichte auch bei hohen Korngrößen der Partikel bereits bei sehr niedrigen Kalzinierungstemperaturen von unter 800 °C, insbesondere von 700 °C oder weniger, nach kurzer Zeit eine vollständige Umsetzung zu den erfindungsgemäßen Übergangsmetalloxidpartikeln stattfinden kann.

Eine vollständige Umsetzung des lithiumhaltigen Übergangsmetallpräkursors zum Produkt kann beispielsweise bereits bei 350 °C in 3 h erfolgen. Durch die Kalzinierung entsteht insbesondere die erfindungsgemäß vorteilhafte Spinellstruktur. Eine kontrollierte Einstellung der Kristallitgröße kann direkt in einer ersten Kalzinierungsstufe oder separat in einer zweiten Kalzinierungsstufe vorgenommen werden. Die erfindungsgemäßen Produkte sind üblicherweise röntgenographisch phasenrein. Neben der freien Einstellbarkeit der Kristallitgröße durch die gewählten Kalzinierungsbedingungen, d.h. Kalzinierungstemperatur und Kalzinierungsdauer, bei gleichzeitig hoher Dichte zeichnet sich das erfindungsgemäße Verfahren dadurch aus, dass hohe Temperaturen vermieden werden können, wodurch in vorteilhafter Weise die Bildung von NiO Fremdphasen vermieden werden kann. Hohe Temperaturen und lange Ausheilzeiten wie bei den Verfahren des Stands der Technik werden daher nicht benötigt. Der Energieverbrauch und die Produktionskosten werden, verglichen mit im Stand der Technik beschriebenen Herstellungsverfahren, verringert.

Die erfindungsgemäßen Partikel können als Agglomerate von kleinen Primärkristalliten zu größeren (Sekundär-)Partikeln beschrieben werden. Die spezielle Wachstumsstruktur der erhaltenen Kristallite in den Partikeln erlaubt, trotz der erhaltenen hohen Korndichte und Partikelgrößen, eine schnelle und vollständige Umsetzung in die bevorzugte Spinellstruktur bereits bei sehr niedrigen Temperaturen und kurzen Reaktionszeiten, wie bspw. 3 h bei 350 °C. Im Gegensatz zu plättchenförmigen Primärkristalliten wird in der vorliegenden Erfindung eine hochdichte Wachsttumsstruktur der Partikel durch die spezielle dreidimensionale, kantige Form der Primärkristallite erreicht. Ein Teil der Kristallite kann durch Formen beschrieben werden, die Rhomboedern oder ditrigonalen Skalenoedern verwandt sind. Durch das erfindungsgemäße Verfahren kann die in der Fällungsreaktion (Schritt (a)) erhaltene vorteilhafte Partikelmorphologie weitgehend erhalten bleiben, wie zuvor beschrieben. Entscheidend für die in den erfindungsgemäßen Partikeln erhaltene hohe Klopfdichte ist, dass die Ausbildung plättchenförmiger Kristallite begrenzt wird und sich bevorzugt dreidimensionale im Korn dicht gepackte Kristallite ausbilden.

Durch das erfindungsgemäße Verfahren können somit hochdichte sphärische oder sphäroide Übergangsmetalloxidpartikel hergestellt werden, welche hohe Klopfdichte aufweisen und deren Primärkristallitgrößen gleichzeitig über einen Bereich von wenigen zehn Nanometern bis zur Mikrometerskala frei über die Kalzinierungsbedingungen, insbesondere durch Wahl der Kalzinierungstemperatur, eingestellt werden kann. Damit können, unabhängig von der Klopfdichte, sowohl sehr niedrige als auch hohe Kristallitgrößen eingestellt werden. Die erfindungsgemäßen Produkte erreichen dabei höhere Klopfdichten als die im dem Stand der Technik beschrieben Partikel. Insbesondere konnte in der vorliegende Erfindung gezeigt werden, dass bereits der lithiumfreie Präkursor nach der Fällungsreaktion eine hohe Klopfdichte aufweist, welche über die Umsetzung zum lithiumhaltigen Produkt nach der Kalzinierung in vorteilhafter Weise weiter erhöht wird.

In einem weiteren Aspekt betrifft die vorliegende Erfindung somit Übergangsmetalloxidpartikel der allgemeinen Formel (1), welche durch das zuvor beschriebene Verfahren erhältlich sind:

LiMn_{1,5+y}Ni_{0,5-y-z}M_{z}O₄ (1).

M ist ausgewählt aus einem oder mehreren der Elemente Co, Mg, Fe und Zn, sowie weiter optional ferner Al, V, Cr, Ti, Cu, Be, Ca, Sr, Ba und La. y ist ein Wert von 0 bis kleiner 0,5, z ist ein Wert von 0 bis 0,1 und (y+z) ist ein Wert kleiner 0,5. In einer bevorzugten Ausführungsform ist y ein Wert von 0 bis 0,2, besonders bevorzugt ein Wert von 0 bis 0,1.

Die erfindungsgemäßen Partikel weisen eine durchschnittliche Partikelgröße von 1 bis 40 µm, bevorzugt von 2 bis 30 µm, auf.

Die durchschnittliche Primärkristallitgröße der erfindungsgemäßen Partikel beträgt von 20 bis 1000 nm, bevorzugt von 20 bis 200 nm.

Insbesondere beträgt das Verhältnis zwischen Partikelgröße und Primärkristallitgröße üblicherweise zwischen 1000:1 bis 20:1, insbesondere zwischen 100:1 und 40:1.

Es konnte überraschend festgestellt werden, dass es durch das erfindungsgemäße Verfahren, wie zuvor beschrieben, möglich ist, Übergangsmetalloxidpartikel mit hoher Klopfdichte zu erhalten, insbesondere mit einer Klopfdichte von 2,0 g/cm³ bis 2,8 g/cm³, beispielsweise 2,1 g/cm³, 2,2 g/cm³, 2,3 g/cm³ oder höher. Üblicherweise beträgt die Klopfdichte der erfindungsgemäßen Partikel von 2,1 bis 2,8 g/cm³, insbesondere von 2,2 bis 2,7 g/cm³.

Das Verhältnis des größten Durchmessers zum kleinsten Durchmesser eines Partikels beträgt 1,8 oder weniger, insbesondere 1,4 oder weniger, bevorzugt 1,2 oder weniger, besonders bevorzugt 1,1 oder weniger.

### Verfahrensschritt (e): Herstellung von überlithiierten Übergangsmetalloxidpartikeln

In einem weiteren Aspekt betrifft die vorliegende Erfindung ein Verfahren zur Herstellung von überlithiierten Übergangsmetalloxidpartikeln. Hierbei werden insbesondere die in Schritt (d) des oben beschriebenen Verfahrens erhaltenen Übergangsmetalloxidpartikel als Ausgangsmaterial eingesetzt. Die Herstellung von überlithiierten Übergangsmetalloxidpartikeln kann sowohl auf chemischem als auch auf elektrochemischem Weg erfolgen, wobei die chemische Überlithiierung bevorzugt ist.

### - chemische Überlithiierung (e1)

Die vorliegende Erfindung betrifft somit ferner ein Verfahren, umfassend die Vermischung von der in Schritt (d) des zuvor beschriebenen Verfahrens erhaltenen Übergangsmetalloxidpartikel, mit einer lithiumhaltigen Verbindung und einem Reduktionsmittel, sowie die Umsetzung der Mischung in einer Festphasenreaktion bei einer Temperatur von 120 °C bis 400 °C. Die Umsetzung erfolgt üblicherweise unter Schutzgas, wie beispielsweise unter Stickstoff- oder Argonatmosphäre.

In einer besonders bevorzugten Ausführungsform erfolgt die Umsetzung mit Lithiumiodid. Hierbei dient das in Lithiumiodid enthaltende Iodid als Reduktionsmittel, so dass auf Zusatz eines weiteren Reduktionsmittels verzichtet werden kann. In dieser Ausführungsform findet die Umsetzung bevorzugt unterhalb der Schmelztemperatur des Lithiumiodids von 446 °C statt, so dass eine Festphasenreaktion stattfindet. Bevorzugt beträgt die Temperatur zwischen 150 °C und 400 °C, besonders bevorzugt zwischen 180 °C und 300 °C.

Es konnte überraschend gefunden werden, dass bei Verwendung der erfindungsgemäßen Übergangsmetalloxidpartikel eine schnelle und vollständige Umsetzung zum überlithiierten Produkt bereits bei Temperaturen stattfinden kann, bei denen, nach Lage der Schmelzpunkte, noch eine reine Pulvermischung vorliegt. Die Umsetzung erfolgt somit durch eine Niedertemperaturfestkörperreaktion. Die erfindungsgemäße Reaktion startet bereits bei Temperaturen unter 150°C und läuft bereits bei Temperaturen von unter 300 °C, beispielsweise bei 180-200 °C, in kurzer Reaktionszeit vollständig ab. Der Effekt der schnellen Umsetzung bereits bei Temperaturen unterhalb des Schmelzpunkts der Reaktanden, insbesondere unterhalb des Schmelzpunkts von Lithiumiodid von 446 °C, war insbesondere deshalb unerwartet, da die Reaktanden als physikalische Mischung der reinen Feststoffe vorliegen und keine Benetzung zu erwarten war. Die erfindungsgemäßen Übergangsmetalloxidpartikel liegen zudem in Form hochdichter Partikel vor, in denen zum Teil lange Diffusionswege vorhanden sind. Es war somit vielmehr zu erwarten, dass eine Umsetzung zum überlithiierten Produkt, wenn überhaupt, erst nach Überschreiten der Schmelztemperatur der Reaktanden, wie bspw. des Lithiumiodids, stattfindet. Stattdessen konnte auch bei den als inhomogene Mischung vorliegenden Reaktanden und bei Partikeldurchmessern der erfindungsgemäßen Übergangsmetalloxidpartikel von > 30 µm eine vollständige Umsetzung zum überlithiierten Produkt innerhalb einer kurzen Reaktionszeit erzielt werden.

Weitere Vorteile des erfindungsgemäßen Verfahrens zur Herstellung des überlithiierten Produkts ist, dass bei Einsatz von stöchiometrischen Mengen an Lithiumiodid eine vollständige Umsetzung ohne Auftreten von Nebenprodukten stattfindet. Etwaige Verunreinigungen, wie sie durch unvollständige Umsetzung oder durch überschüssiges Lithiumiodid in der Eduktmischung auftreten können, können aus dem erhaltenen Produkt durch Waschung mit einem geeigneten Lösungsmittel, zum Beispiel mit n-Hexan, entfernt werden.

Ein wesentlicher Vorteil dieser Reaktion ist ferner, dass das entstehende Jod vollständig und rein zurückgewonnen wird. Es kann bevorzugt durch Reaktion mit Lithium, zum Beispiel in metallischer Form, wieder in Lithiumiodid überführt und dem Prozess erneut zugeführt werden. Es fällt somit nicht als zu entsorgendes Abfallprodukt an, sondern kann dem Verfahren zurückgeführt werden, so dass das Iod somit nur als Transportmedium für Lithium dient.

Alternativ kann auch die Umsetzung der Übergangsmetalloxidpartikel mit einer lithiumhaltigen Verbindung, beispielsweise Lithiumcarbonat oder Lithiumhydroxid, und einem Reduktionsmittel, beispielsweise ausgewählt aus Oxalsäure, Ameisensäure, Formaldehyd und deren Derivaten und Salzen erfolgen.

Die chemische Überlithiierung wie zuvor beschrieben kann in ein, zwei oder mehreren separaten Stufen erfolgen. Bevorzugt wird das nach einer ersten Stufe der chemischen Überlithiierung erhaltene Material einer erneuten Überlithiierung unterzogen (Stufe 2). Durch die Durchführung der Überlithiierung in zwei oder mehr Stufen kann der Lithiumanteil der Übergangsmetalloxidpartikel in vorteilhafter Weise weiter gesteigert werden.

### - elektrochemische Überlithiierung (e2)

Alternativ zur chemischen Überlithiierung kann die Überlithiierung auch elektrochemisch erfolgen. Hierbei werden die in Schritt (d) des zuvor beschriebenen Verfahrens erhaltenen Übergangsmetalloxidpartikel in einem Elektrolyten, wie er typischerweise in Lithium-Ionen Batterien eingesetzt wird, in ein überlithiiertes Material überführt. Der Elektrolyt umfasst alle konventionell in elektrochemischen Zellen, insbesondere in Lithium-Ionen-Batterien verwendete Elektrolyte, wie beispielsweise EC:DMC (Ethylencarbonat: Dimethylcarbonat, üblicherweise in einem 1:1 Gewichtsverhältnis). Der Elektrolyt enthält ferner eine geeignete leitfähige Verbindung, insbesondere ein Lithiumsalz wie beispielsweise Lithiumhexafluorophosphat (LiPF₆), wobei hierin keine Einschränkung zu sehen ist.

Die elektrochemische Umsetzung erfolgt typischerweise bei einem Potential von üblicherweise 1,4 V bis 4,0 V, bevorzugt von 1,5 V bis 3,0 V, besonders bevorzugt von 1,8 bis 2,5 V, wobei die Übergangsmetalloxidpartikel elektrochemisch in ein überlithiiertes Material überführt werden. Die für die Überlithiierung erforderlichen Lithiumionen werden dabei von der Gegenelektrode und/oder einer Opferelektrode bereitgestellt. Die Umsetzung zum überlithiierten Material erfolgt dann üblicherweise, je nach gewünschtem Gehalt an zusätzlichem Lithium (Wert x in der allgemeinen Formel (2), wie im Folgenden beschrieben), durch Umsetzung bei konstantem Strom bis zum Erreichen des erforderlichen Grenzpotentials, beispielsweise 1,5 V vs. Li/Li⁺, wie zuvor beschrieben. Die Überlithiierung kann dabei in vorteilhafter Weise zusätzlich durch eine anschließende potentiostatische Nachlithiierung nach Erreichen des Grenzpotentials unterstützt werden. Falls erforderlich, kann der Umsetzung zum überlithiierten Material auch eine Aktivierung durch partielle oder vollständige Delithiierung des Materials vorangestellt werden. Dieser Prozess kann ebenfalls auf elektrochemischem Wege erfolgen.

### - Überlithiierte Übergangsmetalloxidpartikel

Die für die Übergangsmetalloxidpartikel beschriebene Partikelmorphologie bleibt auch in den überlithiierten Partikeln erhalten, welche somit ebenfalls sphärische oder sphäroide Morphologie bei hoher Klopfdichte aufweisen, wie zuvor für die Übergangsmetalloxidpartikel beschrieben, wobei die Klopfdichte sogar noch weiter zunehmen kann. Ferner zeichnen sich die überlithiierten Partikeln durch hohe elektrochemische Aktivität aus.

Die vorliegende Erfindung betrifft somit ferner überlithiierte Übergangsmetalloxidpartikel der allgemeinen Formel (2), welche durch das erfindungsgemäße Verfahren herstellbar sind.

Durch das zuvor beschriebene Verfahren werden Übergangsmetalloxidpartikel der allgemeinen Formel (2) erhalten:

Li₁₊ₓMn_{1,5+y}Ni_{0,5-y-z}M_{z}O₄ (2),

wobei x ein Wert von 0<x<1,5 ist,
M ausgewählt ist aus einem oder mehreren der Elemente Co, Mg, Fe und Zn, sowie weiter optional ferner Al, V, Cr, Ti, Cu, Be, Ca, Sr, Ba und La, y ein Wert von 0 bis kleiner 0,5 ist, z ein Wert von 0 bis 0,1 ist, und (y+z) ein Wert kleiner 0,5 ist. In einer bevorzugten Ausführungsform ist y ein Wert von 0 bis 0,2, besonders bevorzugt ein Wert von 0 bis 0,1.

Die erfindungsgemäßen überlithiierten Partikel weisen eine durchschnittliche Partikelgröße von 1 bis 40 µm, bevorzugt von 2 bis 30 µm, auf.

Die durchschnittliche Primärkristallitgröße der erfindungsgemäßen überlithiierten Partikel beträgt 20 bis 1000 nm, bevorzugt von 20 bis 200 nm.

Insbesondere beträgt das Verhältnis zwischen Partikelgröße und Primärkristallitgröße üblicherweise zwischen 1000:1 bis 20:1, insbesondere zwischen 100:1 und 40:1.

Es konnte überraschend festgestellt werden, dass es durch das erfindungsgemäße Verfahren, wie zuvor beschrieben, möglich ist, überlithiierte Übergangsmetalloxidpartikel mit hoher Klopfdichte von 2,2 g/cm³ bis 3,0 g/cm³, beispielsweise 2,3 g/cm³, 2,4 g/cm³ oder höher. Üblicherweise beträgt die Klopfdichte der erfindungsgemäßen Partikel von 2,3 bis 3,0 g/cm³, insbesondere von 2,4 bis 2,8 g/cm³.

Die Partikel weisen sphärische oder sphäroide Kornform auf, wobei das Verhältnis des größten Durchmesser zum kleinsten Durchmesser eines Partikels 1,8 oder weniger, insbesondere 1,4 oder weniger, bevorzugt 1,2 oder weniger, besonders bevorzugt 1,1 oder weniger, beträgt.

### Verwendung der erfindungsgemäßen (überlithiierten) Übergangsmetalloxidpartikel

Sowohl die erfindungsgemäßen Übergangsmetalloxidpartikel der allgemeinen Formel (1) als auch deren überlithiierte Form gemäß der allgemeinen Formel (2) eignen sich durch deren hohe elektrochemische Aktivität in besonderem Maße als Elektrodenmaterial, beispielsweise als Kathodenmaterial, insbesondere in Lithiumbatterien, wie beispielsweise in Lithiumionenakkumulatoren.

Die erfindungsgemäßen überlithiierten Übergangsmetalloxidpartikel eigenen sich ferner in besonderem Maße als Speichermaterial in Lithiumakkumulatoren oder als Additiv in Kathodenmaterialien oder Anodenmaterialien. Hierdurch können insbesondere bei Verwendung von hochkapazitiven Elektroden irreversible Anfangsverluste zu kompensieren. Bei Verwendung der überlithiierten Partikel als Elektrodenmaterial kann insbesondere eine hohe Kapazität und hohe Zyklenstabilität erzielt werden.

### Beispiele

### Messmethoden

### Bestimmung von Schüttdichte und Klopfdichte

Die Bestimmung der Klopfdichte (synonym: Stampfdichte) erfolgte unter Verwendung eines Stampfvolumeters (STAV 2003, J. Engelsmann AG) nach Angaben des Herstellers. Hierzu wurde die pulverförmige Probe in einen Messzylinder gefüllt und ihre Masse über Wägung bestimmt. Aus dem Quotienten aus Masse und Volumen vor Beginn der Verdichtung wurde zunächst die Schüttdichte bestimmt. Der gefüllte Zylinder wurde dann in einem Stampfvolumeter (STAV 2003, J. Engelsmann AG) montiert, in welchem er 1500fach unter konstanten Bedingungen aufgestampft wird. Der Quotient aus der Probenmasse und dem Probevolumen nach 1500 Klopfvorgängen wurde als Klopfdichte verwendet. Es wurde ein 100 ml Messzylinder verwendet, das Schüttvolumen betrug 100 ml.

### Bestimmung der Primärkristallitgröße

Der Durchmesser von Primärkristalliten der Partikel wurde nach der Pawley-Methode anhand der Reflexbreiten eines Röntgendiffraktogramms bestimmt.

### Bestimmung der Partikelgröße und der Partikelgrößenverteilung

Die Partikelgröße und die Partikelgrößenverteilung (D10, D50, D90) wurde durch Laserbeugungsmessung bestimmt. Alle Größenangaben, soweit nicht anders angegeben, beziehen sich auf den Partikeldurchmesser. Der D50-Wert gibt die mittlere Partikelgröße an. D50 bedeutet, dass 50% der Partikel kleiner sind als der angegebene Wert. Entsprechend bedeuten D10 und D90, dass jeweils 10 bzw. 90% der Partikel kleiner sind, als der angegebene Wert.

### Bestimmung der Partikelmorphologie

Die Partikelmorphologie wurde anhand röntgenelektronenmikroskopischer Aufnahmen der Partikel bestimmt. Hierbei wurden die Partikel auf eine Ebene projiziert und der kleinste und größte Durchmesser der Partikel in der Projektion bestimmt.

### Beispiel 1

### a) Herstellung des lithiumfreien Übergangsmetallpräkursors (Vorstufe)

Die Herstellung erfolgte in einem kontinuierlich betriebenen Rührreaktor. Dazu wurden parallel drei verschiedene Lösungen (Metallsalz, Lauge, NH₃) mit konstantem Volumenstrom in einen mit demineralisiertem Wasser gefüllten Reaktor eingeführt wo sie intensiv durchmischt wurden. Metallsalz und Lauge reagierten dabei unter Bildung eines unlöslichen Niederschlags. Parallel zur Zugabe wurde ein entsprechendes Volumen der gebildeten Suspension über einen Überlauf aus dem Reaktorraum abgeführt. Nach 6 Verweilzeiten hatte sich im Reaktor ein stationäres Gleichgewicht eingestellt, es wurde mit der Probenahme begonnen. Die Reaktionsbedingungen waren wie in **Tabelle 1** angegeben.

Die Suspension wurde gesammelt und anschließend auf einer Saugnutsche filtriert. Der Feststoff wurde dabei von der Mutterlauge abgetrennt und anschließend mit demineralisiertem Wasser neutralsalzfrei gewaschen. Die Mutterlauge wurde chemisch untersucht und die Konzentrationen an NH4⁺, NH₃ und OH⁻ bestimmt. Die ermittelten Konzentrationen sind in **Tabelle 2** angegeben.

Der Feststoff wurde anschließend bei einer Temperatur von 100 °C getrocknet. Das getrocknete Pulver wurde auf Klopfdichte, Morphologie und chemische Zusammensetzung untersucht, wie in **Tabelle 3** angegeben.

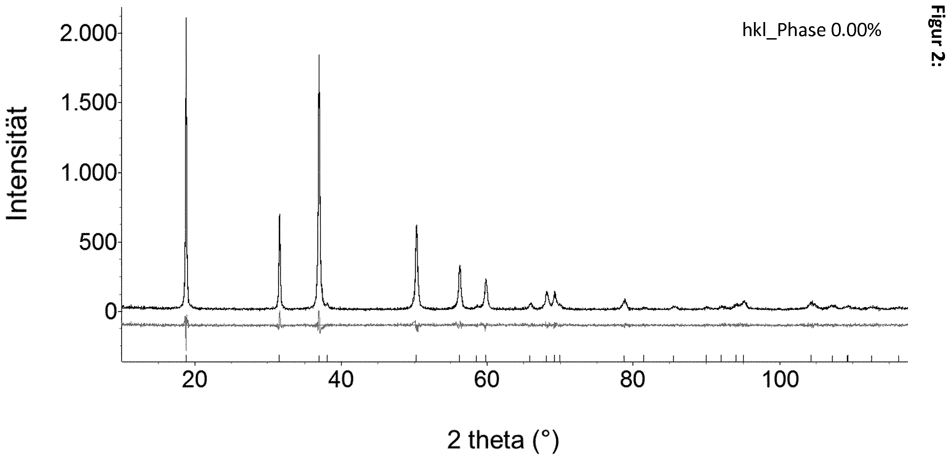

Figur 2 zeigt die Röntgenbeugungsaufnahme eines erfindungsgemäßen lithiumfreien Präkursors der Zusammensetzung Ni:Mn = 1:3 nach der Aufarbeitung unter Stickstoff und Trocknung bei 120°C. Es liegt die Brucitstruktur vor, Raumgruppe P-3m1, Gitterparameter a= 3,2715 A, c = 4,7239 A, Kristallitgröße LVolIB =110 nm.

### b) Herstellung der Lithium-Nickel-Mangan-Übergangsmetalloxidpartikel (Produkt I)

Die Herstellung erfolgte durch Vermischen des unter a) erhaltenen Prekursors mit einer Lithiumhydroxidlösung und Eindampfen der Suspension bis zur Trockene. Die Menge an Lithiumhydroxidlösung wurde so gewählt, dass das atomare Verhältnis von Li : (Mn+Ni) = 0.5 beträgt. Die trockene Mischung aus Prekursor und LiOH wurde anschließend, wenn nicht anders angegeben, 3 h bei 300°C vorkalziniert und danach bei 700°C über 12 h endkalziniert.

Die erhaltenen Übergangsmetallpartikel wurden auf Klopfdichte, Morphologie und chemische Zusammensetzung untersucht, wie in **Tabelle 3** angegeben.

### c) Herstellung der überlithiierten Übergangsmetalloxidpartikel (Produkt 2)

5 g der unter b) erhaltenen lithiumhaltigen Übergangsmetalloxidpartikel wurden mit 6 g LiJ gemischt und in ein Glasrohr mit Bodenfritte gegeben. Durch die Bodenfritte spülte trockenes Argon durch die Probe. Es wurde stöchiometrische Mengen an LiJ eingesetzt, so dass eine vollständige Umsetzung stattfand. Die Reaktion wurde unter Ausschluss von Feuchtigkeit durchgeführt, da LiJ hygroskopisch ist. Sauerstoffzutritt wurde vermieden. Gefäß und Gaszuleitung wurden über ein Ölbad auf Temperaturen zwischen 150 °C und 200 °C erhitzt. Das bei der Umsetzung entstehende gasförmige elementare Jod I₂ wurde durch Spülung mit Argon ausgetrieben. Das Iod wurde in einer Kühlvorrichtung als Feststoff auskristallisiert und so in hochreiner Form zurückgewonnen. Typische Reaktionszeiten lagen zwischen 30 Minuten und 2 Stunden. Das entstehende Produkt war frei von Nebenprodukten.

### Beispiele 2 bis 4

Die Herstellung des lithiumfreien Übergangsmetallpräkursors sowie der Lithium-Nickel-Mangan-Übergangsmetalloxidpartikel erfolgte wie für Beispiel 1 beschrieben, wobei die Reaktionsbedingungen wie in **Tabelle 1** beschrieben gewählt wurden. Die aus der Mutterlauge ermittelten Konzentrationen an NaOH, NH₄⁺ und NH₃ sind in **Tabelle 2** angegeben. Die erhaltenen Übergangsmetallpartikel wurden auf Klopfdichte, Morphologie und chemische Zusammensetzung untersucht, wie in **Tabelle 3** angegeben.

### Vergleichsbeispiele 1 und 2

Die Herstellung des lithiumfreien Übergangsmetallpräkursors sowie der Lithium-Nickel-Mangan-Übergangsmetalloxidpartikel erfolgte wie für Beispiel 1 beschrieben, wobei die Reaktionsbedingungen wie in **Tabelle 1** beschrieben gewählt wurden. Die aus der Mutterlauge ermittelten Konzentrationen an NH4⁺, NH₃ und OH⁻ sind in **Tabelle 2** angegeben. Die erhaltenen Übergangsmetallpartikel wurden auf Klopfdichte, Morphologie und chemische Zusammensetzung untersucht, wie in **Tabelle 3** angegeben.

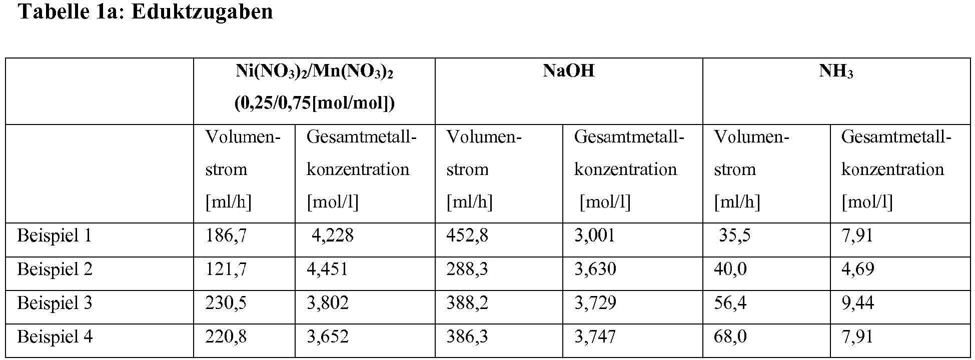

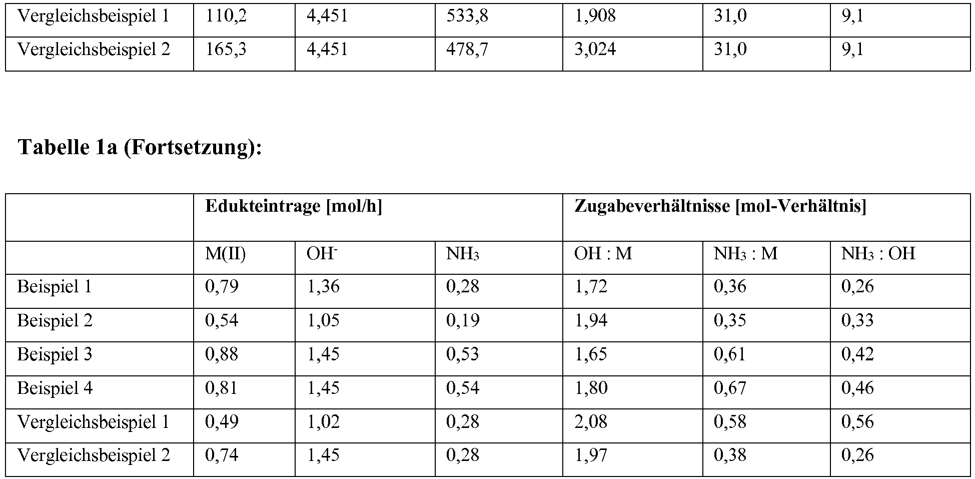

**Tabelle 1b: Reaktionsparameter**

| | **Temperatur [°C]** | **Rührerdrehzahl [U/min]** | **Verweilzeit [h]** | **Dauer bis Probennahme [h]** | **Feststoffgehalt [Gew.%]** |
|---|---|---|---|---|---|
| Beispiel 1 | 60 | 900 | 2 | 12 | 10,5 |
| Beispiel 2 | 49 | 900 | 3 | 18 | 10,8 |
| Beispiel 3 | 60 | 900 | 2 | 12 | 11,7 |
| Beispiel 4 | 65 | 900 | 2 | 12 | 10,9 |
| Vergleichsbeispiel 1 | 60 | 900 | 2 | 12 | 6,5 |
| Vergleichsbeispiel 2 | 60 | 900 | 2 | 12 | 9,8 |

**Tabelle 2: Konzentration NH4⁺ und NH₃ im Filtrat**

| | **c NH₃ [mol/l]** | **c NH4⁺ [mol/l]** | **c OH⁻ [mol/l]** |
|---|---|---|---|
| Beispiel 1 | 0,137 | 0,158 | - |
| Beispiel 2 | 0,355 | 0,049 | - |
| Beispiel 3 | 0,500 | 0,184 | - |
| Beispiel 4 | 0,017 | 0,124 | - |
| Vergleichsbeispiel 1 | 0,364 | - | 0,075 |
| Vergleichsbeispiel 2 | 0,294 | 0,021 | - |

**Tabelle 3a: Chemische Zusammensetzung des lithiumfreien Übergangsmetallpräkursors (Vorstufe)**

| | **Li [Gew.%]** | **Mn [Gew.%]** | **Ni [Gew.%]** | **Na [Gew.%]** |
|---|---|---|---|---|
| Beispiel 1 | 0 | 49,46 | 17,41 | < 0.02 |
| Beispiel 2 | 0 | 49,05 | 17,54 | < 0.02 |
| Beispiel 3 | 0 | 48,42 | 17,73 | < 0.02 |
| Beispiel 4 | 0 | 49,52 | 15,87 | < 0.02 |
| Vergleichsbeispiel 1 | Nicht bestimmt wegen geringer Klopfdichte und fehlender Sphärizität | | | |
| Vergleichsbeispiel 2 | Nicht bestimmt wegen geringer Klopfdichte und fehlender Sphärizität | | | |

**Tabelle 3b: Chemische Zusammensetzung der lithiumhaltigen Übergangsmetalloxidpartikel (Produkt I)**

| | **Li [Gew.%]** | **Mn [Gew.%]** | **Ni [Gew.%]** | **Na [Gew.%]** |
|---|---|---|---|---|
| Beispiel 1 | 3,84 | 44,32 | 15,78 | < 0.02 |
| Beispiel 2 | 3,87 | 46,41 | 16,92 | < 0.02 |
| Beispiel 3 | 4,04 | 47,31 | 16,86 | < 0.02 |
| Beispiel 4 | 4,02 | 49,42 | 15,48 | < 0.02 |

**Tabelle 3c: chemische Zusammensetzung der lithiumhaltigen Übergangsmetalloxidpartikel (Produkt II)**

| | **Li [Gew.%]** | **Mn [Gew.%]** | **Ni [Gew.%]** | **Na [Gew.%]** |
|---|---|---|---|---|
| Beispiel 1 | 7,69 | 45,09 | 15,81 | < 0.02 |
| Beispiel 2 | n.b. | n.b. | n.b. | < 0.02 |
| Beispiel 3 | n.b. | n.b. | n.b. | < 0.02 |
| Beispiel 4 | n.b. | n.b. | n.b. | < 0.02 |

| | | | | |
|---|---|---|---|---|
| n.b. = nicht bestimmt | | | | |

**Tabelle 4: Partikelmorphologie**

| | **Ausführung** | **D10 [µm]** | **D50 [µm]** | **D90 [µm]** | **Morphologie** | **Klopfdichte [g/cm³]** |
|---|---|---|---|---|---|---|
| Beispiel 1 | Vorstufe I | 7,7 | 15,2 | 27,8 | sphärisch | 2,03 |
| | Produkt I | n.b. | n.b. | n.b. | sphärisch | 2,45 |
| | Produkt II | n.b. | n.b. | n.b. | sphärisch | 2,46 |
| Beispiel 2 | Vorstufe I | 6,4 | 13,0 | 26,4 | sphärisch | 2,07 |
| Beispiel 3 | Vorstufe I | 7,6 | 14,5 | 25,4 | sphärisch | 2,00 |
| | Produkt I | 7,4 | 14,4 | 26,5 | sphärisch | 2,28 |
| Beispiel 4 | Vorstufe I | n.b. | n.b. | n.b. | sphärisch | 2,01 |
| | Produkt I | 8,6 | 22,2 | 42,7 | sphärisch | 2,51 |
| Vergleichsbeispiel 1 | Vorstufe I | 0,6 | 6,0 | 44,1 | irregulär | 1,3 |
| Vergleichsbeispiel 2 | Vorstufe I | 6,0 | 11,1 | 18,9 | teilagglomeriert | 1,34 |

| | | | | | | |
|---|---|---|---|---|---|---|
| n.b. = nicht bestimmt | | | | | | |

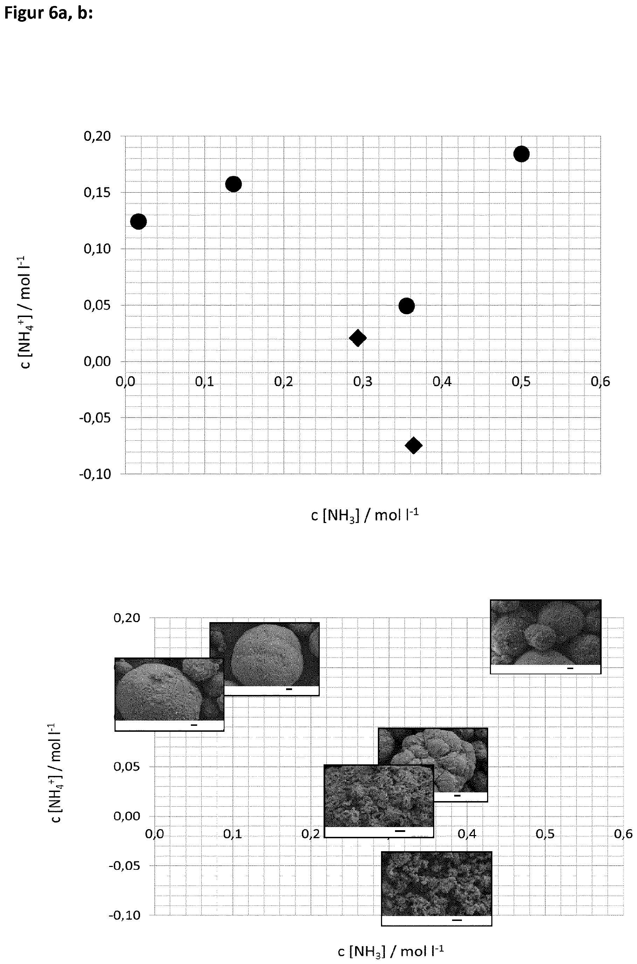

Eine Übersicht der erhaltenen Partikelmorphologien in Abhängigkeit der bei der Fällung bestimmten Konzentrationen an NH₃ und NH4⁺ in der Mutterlauge ist in Figur 6 dargestellt.

Es konnte gezeigt werden, dass bei Einstellung einer NH4⁺-Konzentration in der Mutterlauge bei der Fällungsreaktion von 0,05 mol/l Partikel erhalten werden konnten, welche eine sphärische Morphologie bei gleichzeitig hoher Klopfdichte aufweisen. Im Gegensatz hierzu wurde im Vergleichsbeispiel 1, in welcher überstöchiometrisch NaOH eingesetzt wurde, also OH⁻ -Ionen in der Mutterlauge zurückblieben, irregulär geformte Partikel mit geringer Klopfdichte erhalten. Im Vergleichsbeispiel 2, in welcher die NH4⁺-Konzentration unterhalb von 0,05 mol/l lag, wurden teilagglomerierte, nicht-sphärische Partikel mit geringer Klopfdichte erhalten.

### Beispiel 5:

Ein nach Beispiel 1 hergestelltes Übergangsmetalloxid wurde mit verschiedenen Mengen an LiJ umgesetzt. Der Lithiumgehalt (1+x) in Li₁₊ₓM₂O₄ konnte nach dem für Beispiel 1 beschriebenen Verfahren sehr gut über die verwendete Menge an Lithiumjodid eingestellt werden. Produkte nach Umsetzung mit LiJ zeigten im Röntgendiffraktogramm im Reflexmuster noch Schultern, die insbesondere am Hauptreflex bei 18° = 2 theta zu erkennen sind.

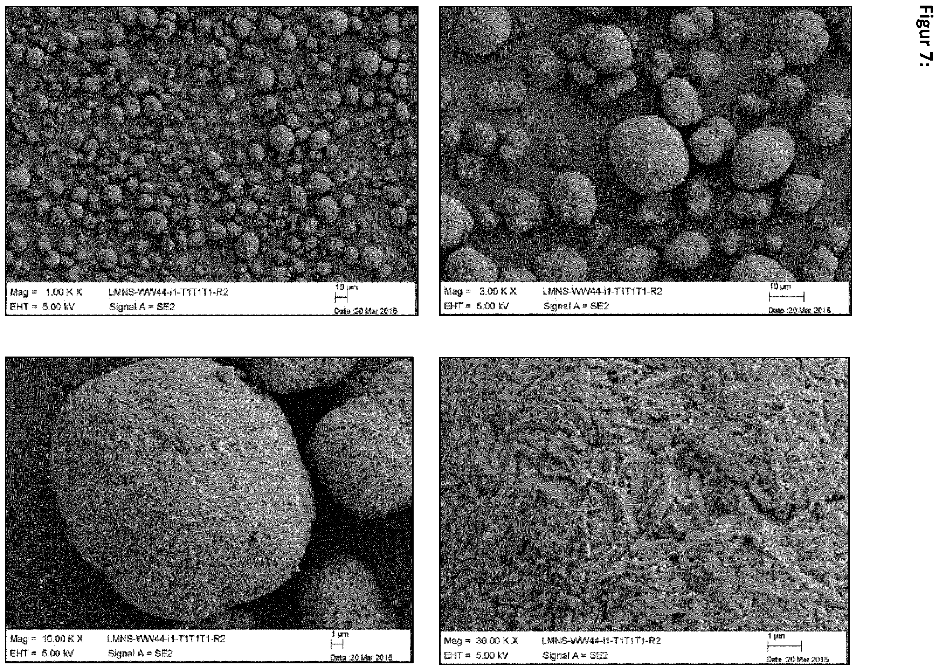

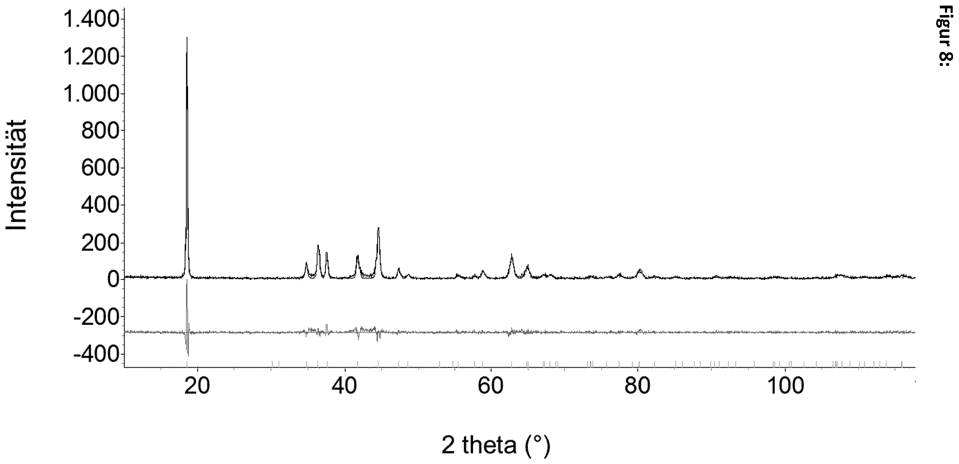

Die Kristallstrukturen wurden durch Röntgenbeugung bestimmt und sind in Tabelle 5 gezeigt. Mikroskopische Aufnahmen der Partikel des in Beispiel 1 erhaltenen überlithiierten Produkts mit der Klopfdichte von 2,46 ist in Figur 7 gezeigt. Das entsprechende Diffraktogramm des phasenreinen Li₂Ni_{0,5}Mn_{1,5}O₄ mit der Raumgruppe 141/amd ist in Figur 8 gezeigt.

| Zusammensetzung aus ICP | Phasen | Raumgruppe | Symmetrie | Gitterparameter [Å] | | Zellvolumen [Å³] | Kristallitgröße [nm] |
|---|---|---|---|---|---|---|---|
| | | | | a | c | | L Vol IB |
| Li_{1,74}Ni_{0,50}Mn_{1,50}O₄ | L2MNS | 141/amd | tetragonal | 5,7529 | 8,6376 | 285,88 | 102 |
| | LMNS | Fd-3m | kubisch | 8,1754 | | 546,62 | 95 |
| Li_{1,98}Ni_{0,49}Mn_{1,51}O₄ | L2MNS | 141/amd | tetragonal | 5,7469 | 8,6345 | 285,17 | 110 |
| Li_{2,01}Ni_{0,49}Mn_{1,51}O₄ | L2MNS | 141/amd | tetragonal | 5,7484 | 8,6399 | 285,50 | 99 |
| Li_{2,03}Ni_{0,50}Mn_{1,50}O₄ | L2MNS | 141/amd | tetragonal | 5,7466 | 8,6496 | 285,34 | 95 |

Es konnte somit gezeigt werden, dass die vorteilhafte sphärische Partikelmorphologie der erfindungsgemäßen Partikel auch nach der Überlithiierung erhalten bleibt.

### Beispiel 6: Einfluss der Kalzinierungstemperatur auf die Kristallitgröße

Es wurden nach dem unter Beispiel 1 beschriebenen Verfahren Übergangsmetalloxidpartikel hergestellt, und wie im folgenden beschrieben bei unterschiedlichen Temperaturen und Zeiträumen kalziniert. Der Einfluss der Kalzinierungstemperatur auf die Kristallitgröße der Partikel wurde durch Röntgenbeugung bestimmt.

Figur 2 zeigt das Röntgendiffraktogramm von erfindungsgemäßen Übergangsmetalloxidpartikeln nach Kalzinierung über 3h bei 350°C. Durch Auswertung des Diffraktogramms mit der Pawley Methode ergibt sich aus den Reflexbreiten eine Primärkristallitgröße der Spinelle von L Vol IB = 15 - 20 nm. Das Röntgenbeugungsbild zeigt einen phasenreinen LNMS.

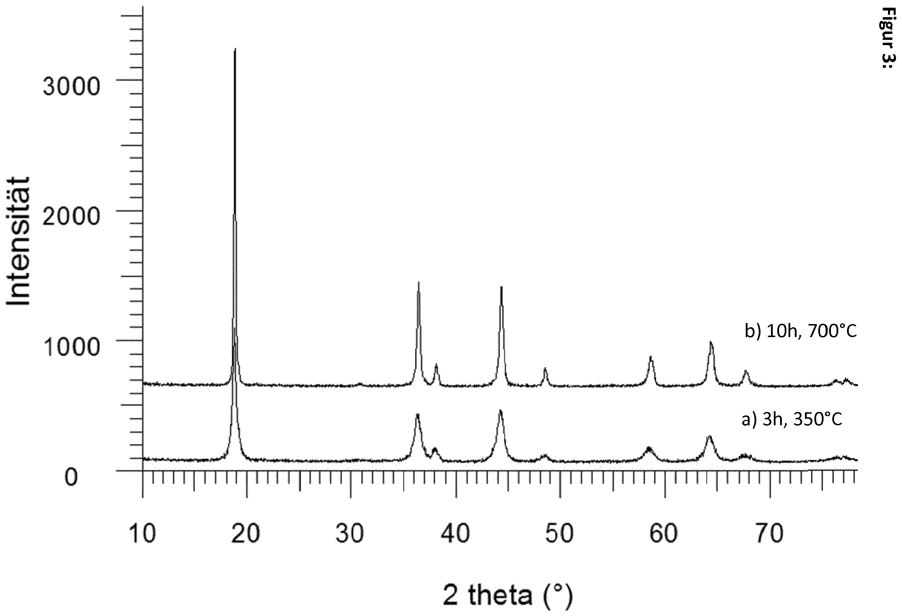

Figur 3 zeigt das Diffraktogramm einer erfindungsgemäßen Probe, die 3h bei 350°C und einer Probe, die bei 700°C über 10 h kalziniert wurde. Im Vergleich zu einer bei niedrigerer Temperatur umgesetzten Probe sind die Reflexhalbwertsbreiten nach Kalzinierung bei höherer Temperatur schmaler, was Kristallitwachstum anzeigt. Die Kristallitgröße nach der Pawley-Methode liefert Werte von 100 - 200 nm.

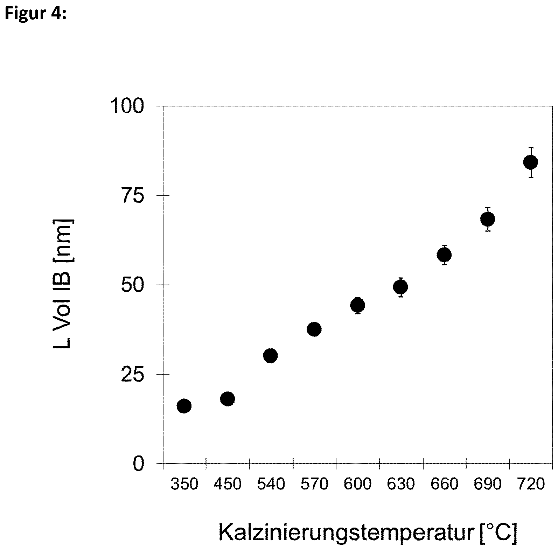

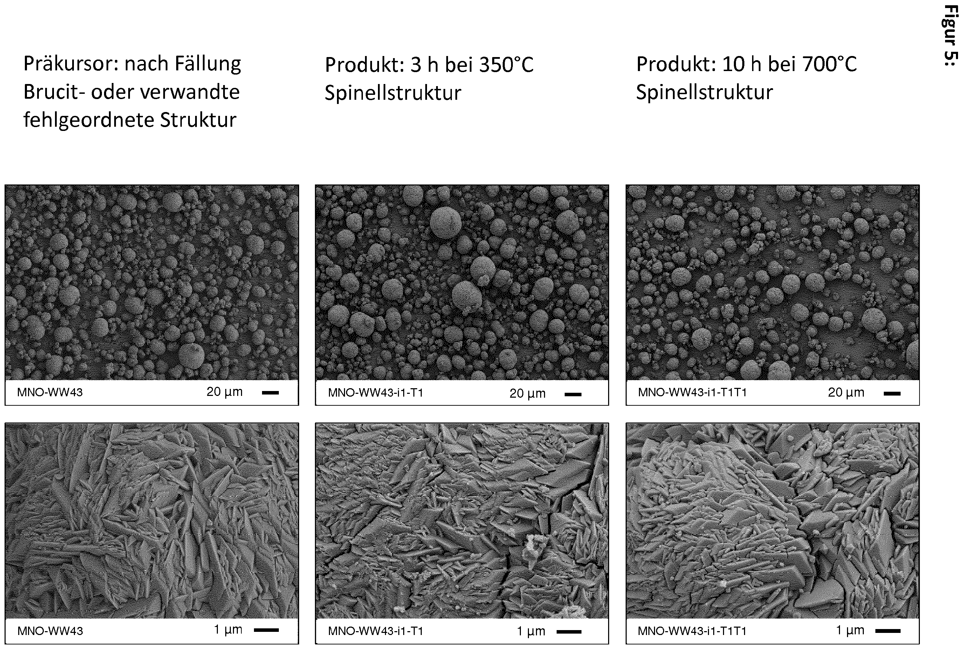

Die Steuerbarkeit der Kristallitgröße durch den Einfluss der Kalzinierungstemperatur ist in Figur 4 gezeigt. Figur 5 zeigt, dass der spezielle Kornaufbau durch die thermische Umsetzung keine Änderungen erfährt.

### Beispiel 7: Charakterisierung des elektrochemischen Verhaltens von erfindungsgemäßen Übergangsmetalloxidpartikeln (Produkt 1)

Lithium-Nickel-Mangan-Übergangsmetalloxidpartikel der Zusammensetzung Li₁Ni_{0.5}Mn_{1.5}O₄ wurden wie im Beispiel 1 beschrieben hergestellt und deren elektrochemisches Verhalten bestimmt.

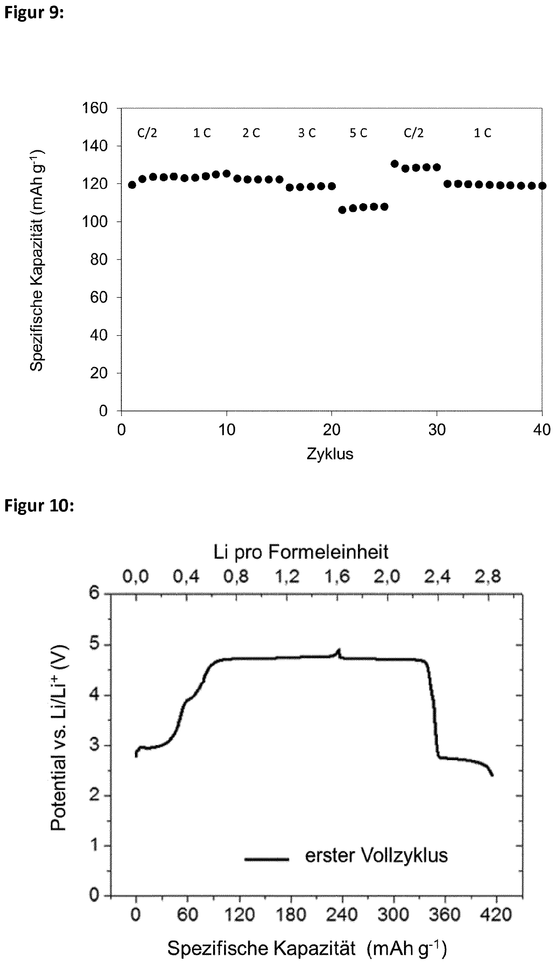

Das elektrochemische Verhalten der Partikel wurde anhand von Elektroden untersucht, die auf technischen Anlagen beschichtet wurden und auch technisch typische Elektrodenbelegungen von 15 mg/cm² und höher aufweisen. Die Zyklisierung erfolgte in Halbzellengeometrie in Knopfzellen der Firma MTI gegen metallisches Lithium. Als Separator wurde ein Glasfiberlage GFA von Whatman eingesetzt, als Elektrolyt verwendete man EC:DMC (1:1) mit 1 M LiPF₆ als Leitsalz. Die Zyklisierung erfolgte zwischen verschiedenen Potentialgrenzen mit einer Ladeabschaltspannung von 4.9 V und Entladeabschaltspannungen von 3,5 V, 2,4 V, 1,9 V und 1,5 V vs. Li/Li⁺. Die Ladung erfolgte für alle Proben bei 0,5 C. Für den Arbeitsbereich 3,5 - 4,9 V vs. Li/Li⁺ ist ein Belastungstest mit Entladeraten von C/2 bis 5 C gezeigt, wobei die C-Rate auf die theoretische Ladekapazität des LiNi_{0.5}Mn_{1.5} O₄ bezogen ist, siehe Figur 9. Belastbarkeit und Zyklenstabilität der erfindungsgemäßen Materialien sind auch bei hohen Elektrodenbelegungen, wie hier für 15 mg/cm² LiNi_{0,5}Mn_{1,5} O₄ gezeigt, exzellent.

Dieser Arbeitsbereich entspricht der 4,7 V Arbeitsstufe des Materials. Im Arbeitsbereich 4,9-3,5 V werden etwa 120 mAh/g genutzt. Die Belastbarkeit ist auch bei 5 C sehr hoch.

### Beispiel 8: Charakterisierung des elektrochemischen Verhaltens von erfindungsgemäß überlithiierten Übergangsmetalloxidpartikeln (Produkt 2)

Überlithiierte Lithium-Nickel-Mangan-Übergangsmetalloxidpartikel der Zusammensetzung Li_{1,6}Ni_{0,5}Mn_{1,5}O₄ wurden wie im Beispiel 1 beschrieben hergestellt und deren elektrochemisches Verhalten bestimmt.

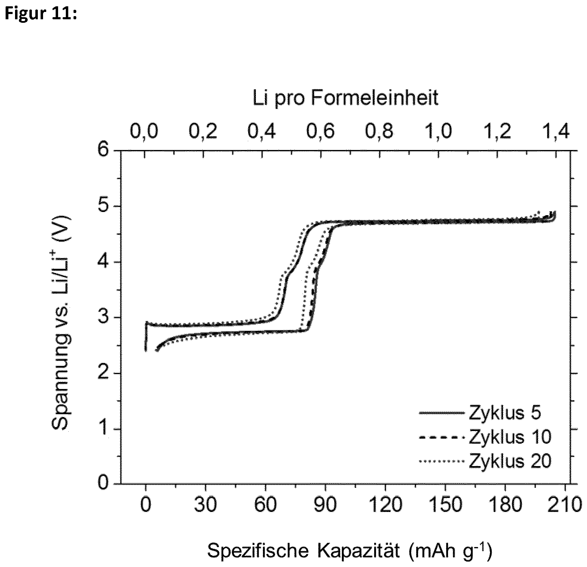

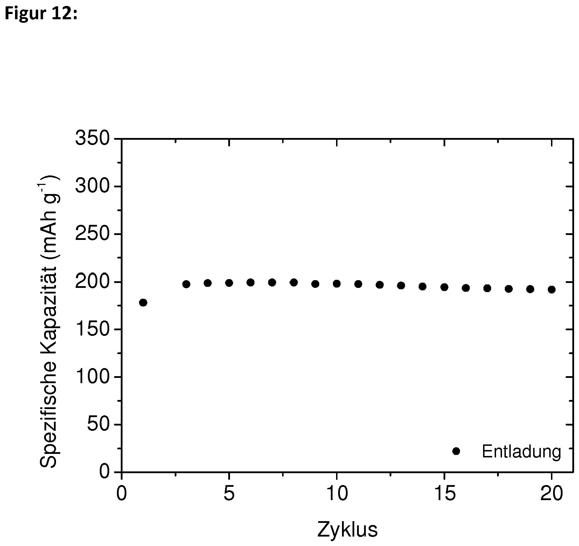

Das elektrochemische Verhalten des erhaltenen Materials ist in den Figuren 10 bis 12 gezeigt. Die Abbildungen zeigen, dass die spezifische Kapazität der erfindungsgemäßen Materialien die kommerziell eingesetzter lithiumreicher Schichtoxide deutlich übersteigt. Die Potentialverläufe zeigen ein stabiles Verhalten und hohe Zyklenstabilität bei niedriger Hysterese zwischen Lade- und Entladeverlauf, was auf eine schnelle Kinetik schließen lässt. In dieser Form kann das überlithiierte Material direkt gegen eine ungeladene Anode verbaut werden.

### Beispiel 9: Charakterisierung des elektrochemischen Verhaltens von elektrochemisch hergestellten überlithiierten Übergangsmetalloxidpartikeln (Produkt 2)

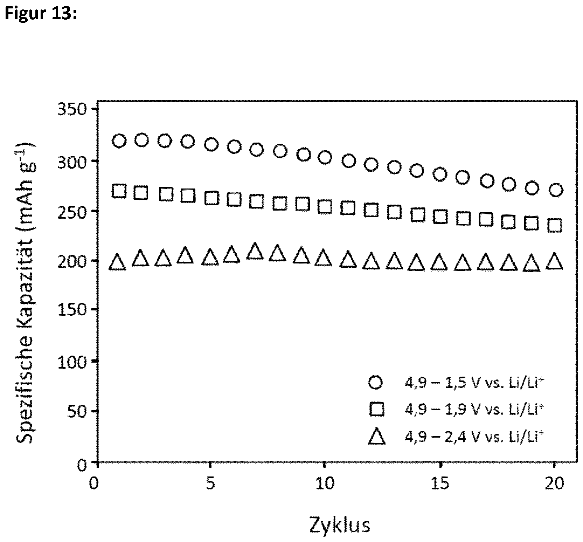

Lithium-Nickel-Mangan-Übergangsmetalloxidpartikel wurden wie im Beispiel 1 beschrieben hergestellt und anschließend elektrochemisch in ein überlithiiertes Produkt überführt. Hierzu wurden die Übergangsmetalloxidpartikel bei Potentialen von 2,4 V, 1,9 V und 1,5 V vs. Li/Li⁺ im Elektrolyten als Elektrode in ein lithiumreiches Material überführt und das elektrochemische Verhalten des erhaltenen überlithiierten Materials bestimmt (Figur 13). Aus den erhaltenen Werten für die spezifische Kapazität von 200 mAh/g (bei 2,4 V), 270 mAh/g (bei 1,9 V) sowie 320 mAh/g (bei 1,5 V) lässt sich die Zusammensetzung der entsprechenden überlithiierten Produkte zu Li_{2,18}Ni_{0.5}Mn_{1.5}O₄, Li_{1,84}Ni_{0.5}Mn_{1,5}O₄ sowie Li_{1,36}Ni_{0,5}Mn_{1,5}O₄ bestimmen.

Zyklisiert man das erhaltene Material im Arbeitsbereich 4,9-2,4 V vs. Li/Li⁺ werden bereits mehr als 200 mAh/g reversibel bei hoher Stabilität genutzt. Dieses übersteigt die spezifische Kapazität des kommerziell eingesetzten Schichtoxids NCA von 180 mAh/g bereits deutlich. Zyklisierung im Arbeitsbereich von 4,9 - 1,9 V vs. Li/Li⁺ erlaubt die Nutzung von Maximalwerten für die spezifische Kapazität von 270 mAh/g. Diese übertrifft bereits die hohen Kapazitätswerte lithiumreicher Schichtoxide. Bei weiterer Zyklisierung im Arbeitsbereich von 4,9 - 1,5 V vs. Li/Li⁺ können sogar bis zu 320 mAh/g erzielt werden. Das erfindungsgemäße Material kann somit als hochkapazitives Kathodenmaterial in Vollzellen eingesetzt werden, und zwar sowohl in überlithiierter als auch in nicht-überlithiierter Form.

### Beispiel 10: Verwendung des erfindungsgemäßen überlithiierten Materials Li_{1,6}Ni_{0,5}Mn_{1,5}O₄ als Additiv in Kathoden für Anwendung in Vollzellen

Möchte man die erfindungsgemäßen Übergangsmetalloxidpartikeln (Produkt 1) elektrochemisch lediglich auf dem Hochvoltplateau nutzen, so kann ein überlithiiertes Material (Produkt 2) vorteilhaft auch als Additiv eingesetzt werden, um den irreversiblen Anfangsverlust der verwendeten Anode zu kompensieren. Beschränkt man die Nutzung des Materials in Hochenergiezellen lediglich auf den Hochvoltbereich, so wird nur ein Teil der möglichen spezifischen Kapazität genutzt, was auf Zellebene geringerer Energiedichte entspricht. Auf Modulebene hingegen kann das hohe Potential vorteilhaft eingesetzt werden: durch das hohe Zellpotential müssen im Modul weniger Einzelzellen verschaltet werden um auf die gewünschte Gesamtspannung zu kommen. Hierdurch gewinnt man Energiedichte auf Systemebene wieder zurück. Diese Variante ist insbesondere hilfreich, wenn hochkapazitive Anoden verwendet werden. Diese haben in der Regel einen hohen irreversiblen Anfangsverlust.

In der Vollzelle sind der Lithiumhaushalt der Kathode und der Anode aneinander gekoppelt. Geht Lithium auf der einen Seite, in der Regel auf der Anode, irreversibel verloren, so steht das Lithium für den elektrochemischen Redoxprozess nicht mehr zur Verfügung. Das Aktivmaterial auf der positiven Elektrode wird somit nicht mehr vollständig relithiiert, es kann nur noch teilgenutzt werden. Das bedeutet erhöhten Materialbedarf und Kosten für die Kathode und verringerte Kapazität für die Zelle. Gelingt es, die irreversiblen Ladungsverluste auf der Anode zu kompensieren, so lässt sich das Kathodenmaterial vollständig nutzen.

Möchte man lediglich das 4,7 V Plateau des erfindungsgemäßen Materials nutzen, so kann überlithiiertes Li₁₊ₓ[Ni_{0,5}Mn_{1,5}]O₄ als Additiv verwendet werden. Im ersten Ladevorgang werden x Lithium des Additivs auf einem 3 V Plateau und 1 Lithium auf dem 4,7 V Plateau exsertiert. Stellt man den Ladungsbetrag aus x dem irreversiblen Ladungsverlust auf der Anode gleich, so kann im weiteren Verlauf das vollständige Hochvoltplateau genutzt werden. Diese ist insbesondere für Anodenmaterialien wie Silicium sowie dessen Komposite sowie amorphe Kohlenstoffe von Bedeutung: deren spezifisch Kapazitätswerte liegen über denen typischer Graphite, gleichzeitig haben sie aber eine hohe irreversible Anfangskapazität.

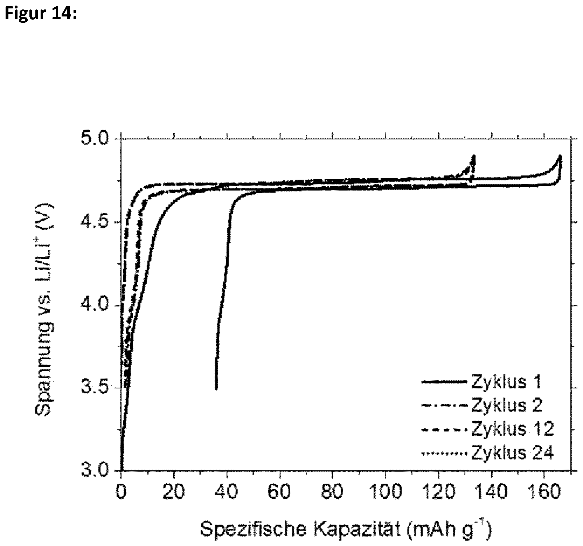

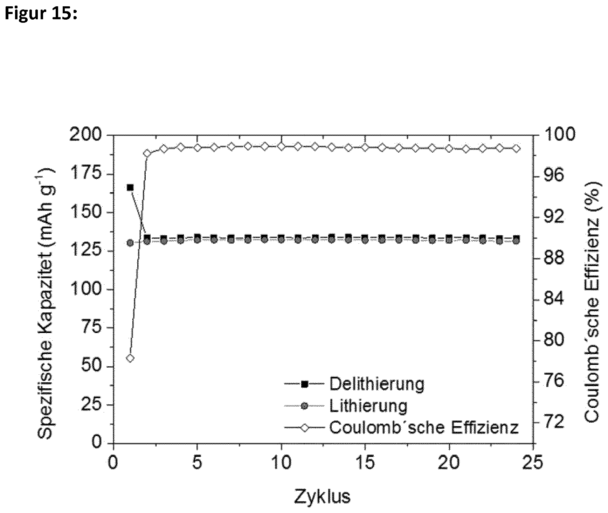

Der Einsatz eines erfindungsgemäßen überlithiierten Pulvers ist in den Abbildungen 14 und 15 dargestellt. Die Zusammensetzung des Elektrodenkomposits betrug 90 Gew.% Aktivmasse sowie 4% Bindemittel und 6% Leitzusatz. Zur Kompensation der irreversiblen Verluste an der negativen Elektrode wurde dem Li_{1,0}[Ni_{0,5}Mn_{1,5}]O₄ (Produkt 1 aus Beispiel 1) ein überlithiiertes Li_{1,6}[Ni_{0,5}Mn_{1,5}]O₄ (Produkt 2 aus Beispiel 1) beigemischt, welches elektrochemisch 0,6 Lithium pro Formeleinheit zusätzlich beisteuern kann. Das Verhältnis der Aktivmassekomponenten wurde so gewählt, dass der auf der Kathode bereitgestellte irreversible Ladungsbeitrag pro Fläche exakt dem irreversiblen Verlust auf der Anode entspricht.

Figur 14 zeigt die Potentialverläufe in Halbzellgeometrie. Die Aktivmaterialmischung aus Produkt 1 und überlithiiertem Produkt 2 wurde auf einen irreversiblen Ladungsbeitrag im ersten Zyklus von 35 mAh/g eingestellt. Dieser Ladungsbeitrag kompensiert exakt den irreversiblen Verlust der verwendeten Anode. Um den Beitrag einzustellen war eine Mischung aus 78 wt-% Li_{1,0}[Ni_{0,5}Mn_{1,5}]O₄ und 22 wt-% Li_{1,6}[Ni_{0,5}Mn_{1,5}]O₄ erforderlich. Der reversible Ladungsumsatz des Elektrodenkomposits beträgt 130 mAh/g. Erster Zyklus: 35 mAh/g irreversibler Verlust durch gezielten Einsatz eines überlithiierten Materials im Elektrodenkomposit. Figur 15 zeigt das Zyklenverhalten des Elektrodenkomposits in Halbzellengeometrie.

Die beschriebene LMNO-Elektrodenkomposit-Elektrode wurde gegen Graphit in Vollzellaufbau zyklisiert. Durch die Kompensation des irreversiblen Ladungsverlusts der Graphitanode durch die Kompositkathode kann auch in Vollzellaufbau das vollständige Hochvoltplateau mit 130 mAh/g LMNO genutzt werden.

### Zelldaten:

| | |
|---|---|
| Kathode: | 15 mg cm⁻² Komposit, 160 mAh g⁻¹ erste Ladung, 130 mAh g⁻¹ in den Folgezyklen |
| Anode: | 9 mg cm⁻² Graphit, 310 mAh g⁻¹ |
| Balance: | 16% Überschuss im ersten Zyklus |
| Elektrolyt: | EC:DMC (1:1 wt%) + 1M LiPF₆ |

Je nach verwendetem Material (Kathode, Anode) und nach erforderlichem Ladungsbeitrag sind die Verhältnisse individuell anzupassen.

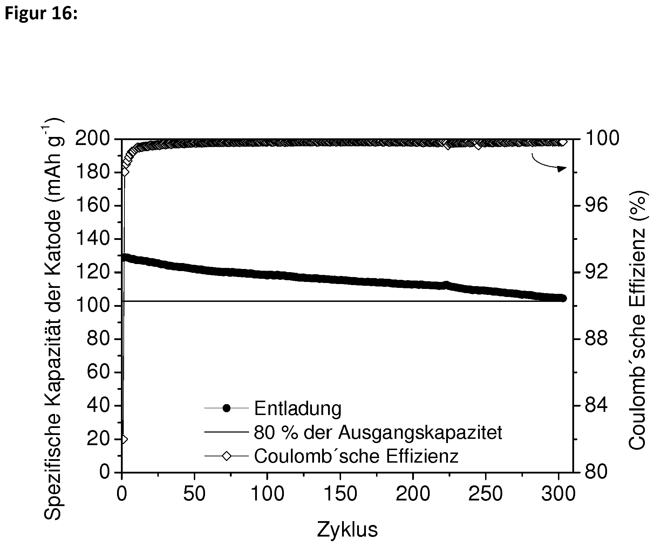

Figur 16 zeigt, dass durch Kompensation der irreversiblen Anodenverluste durch Verwendung des erfindungsgemäßen Elektrodenkomposits auch in der Vollzelle 130 mAh/g LMNO erreicht werden können, was der spezifischen reversiblen Kapazität aus Halbzellenmessungen entspricht.

## Patentansprüche

1. Verfahren zur Herstellung von Übergangsmetalloxidpartikeln der allgemeinen Formel (1):
LiMn_{1,5+y}Ni_{0,5-y-z}M_{z}O₄ (1),
wobei M ein oder mehrere Elemente aus Co, Mg, Fe und Zn umfasst,
y ein Wert von 0 bis kleiner 0,5 ist,
z ein Wert von 0 bis 0,1 ist, und
(y+z) ein Wert kleiner 0,5 ist,
das Verfahren umfassend die Schritte:
(a) Umsetzung einer wässrigen Lösung von Mangansalzen, Nickelsalzen und optional von einem oder mehreren weiteren Salzen der Elemente Co, Mg, Fe und Zn mit einer wässrigen Lösung eines Alkalimetallhydroxids und NH₃, um einen lithiumfreien Übergangsmetallpräkursor aus der Reaktionsmischung auszufällen,
wobei das molare Anfangsverhältnis von OH⁻-Ionen zu Metallionen (OH⁻ : M²⁺) < 1,95 und
wobei die Konzentration an NH₄⁺-Ionen in der Reaktionsmischung nach Einstellung eines chemischen Gleichgewichts 0,05 mol/l oder mehr beträgt,
(b) Isolierung und optional Trocknung des ausgefällten lithiumfreien Übergangsmetallpräkursors aus der Reaktionsmischung,
(c) Umsetzung des lithiumfreien Übergangsmetallpräkursors mit einer wässrigen Lösung einer thermisch zersetzbaren Lithiumverbindung, um einen lithiumhaltigen Übergangsmetallpräkursor zu erhalten, und
(d) Kalzinierung des lithiumhaltigen Übergangsmetallpräkursors bei einer Temperatur von 300°C-800°C.

2. Verfahren nach Anspruch 1, wobei in Schritt (a) die Konzentration an NH₃ in der Reaktionsmischung nach Einstellung eines chemischen Gleichgewichts von 0,01 bis 1,0 mol/l beträgt.

3. Verfahren nach Anspruch 1 oder 2, wobei in Schritt (a) die Konzentration an NH₄⁺-Ionen in der Reaktionsmischung nach Einstellung eines chemischen Gleichgewichts von 0,07 bis 0,25 mol/l, und die Konzentration an NH₃ in der Reaktionsmischung nach Einstellung eines chemischen Gleichgewichts von 0,05 bis 0,75 mol/l beträgt.

4. Verfahren nach einem der vorhergehenden Ansprüche, wobei das Alkalimetallhydroxid in Schritt (a) Natriumhydroxid ist.

5. Verfahren nach einem der vorhergehenden Ansprüche, wobei die Salze in Schritt (a) ausgewählt sind aus Nitraten und Sulfaten.

6. Verfahren nach einem der vorhergehenden Ansprüche, wobei das Umsetzen in Schritt (a) in einem kontinuierlich betriebenen Reaktor erfolgt.

7. Verfahren nach einem der vorhergehenden Ansprüche, wobei die Kalzinierung in Schritt (d) in einer ersten Stufe bei einer Temperatur von 350°C bis 450°C erfolgt und in einer zweiten Stufe bei einer Temperatur von 450°C bis 700°C.

8. Verfahren nach einem der vorhergehenden Ansprüche, ferner umfassend Schritt
(e1) Vermischung der in Schritt (d) erhaltenen Übergangsmetalloxidpartikel mit einer lithiumhaltigen Verbindung und einem Reduktionsmittel und Umsetzung der Mischung in einer Festphasenreaktion bei einer Temperatur von 120°C bis 400°C, um Übergangsmetalloxidpartikel der allgemeinen Formel (2) zu erhalten,
Li₁₊ₓMn_{1,5+y}Ni_{0,5-y-z}M_{z}O₄ (2)
wobei x ein Wert von 0<x<1,5 ist,
und M, y und z wie in Anspruch 1 definiert sind.

9. Verfahren nach Anspruch 8, wobei die Umsetzung in Schritt (e1) mit Lithiumiodid erfolgt.

10. Verfahren nach Anspruch 8 oder 9, wobei die Umsetzung in Schritt (e1) bei einer Temperatur von 180°C bis 300°C erfolgt.

11. Verfahren nach einem der Ansprüche 1 bis 7, ferner umfassend Schritt
(e2) elektrochemische Umsetzung der in Schritt (d) erhaltenen Übergangsmetalloxidpartikel mit einer lithiumhaltigen Gegenelektrode und/oder einer lithiumhaltigen Opferelektrode in einem Elektrolyten bei einem Potential von 1,4 bis 4,0 V, um Übergangsmetalloxidpartikel der allgemeinen Formel (2) zu erhalten,
Li₁₊ₓMn_{1,5+y}Ni_{0,5-y-z}M_{z}O₄ (2)
wobei x ein Wert von 0<x<1,5 ist,
und M, y und z wie in Anspruch 1 definiert sind.

12. Übergangsmetalloxidpartikel der allgemeinen Formel (1), erhältlich durch ein Verfahren wie in einem der Ansprüche 1 bis 7 definiert,
LiMn_{1,5+y}Ni_{0,5-y-z}M_{z}O₄ (1),
wobei M, y und z wie in Anspruch 1 definiert sind,
die Partikel eine durchschnittliche Partikelgröße von 1 bis 40 µm aufweisen,
die durchschnittliche Primärkristallitgröße der Partikel von 20 bis 1000 nm beträgt,
die Klopfdichte von 2.0 bis 2.8 g/cm³ beträgt, und
die Partikel sphärische oder sphäroide Kornform aufweisen, wobei das Verhältnis des größten Durchmessers zum kleinsten Durchmesser eines Partikels 1,8 oder weniger beträgt.

13. Übergangsmetalloxidpartikel der allgemeinen Formel (2), erhältlich durch ein Verfahren wie in einem der Ansprüche 8 bis 11 definiert,
Li₁₊ₓMn_{1,5+y}Ni_{0,5-y-z}M_{z}O₄ (2)
wobei M, y und z wie in Anspruch 1 definiert sind, und
x ein Wert von 0<x<1,5 ist,
die Partikel eine durchschnittliche Partikelgröße von 1 bis 40 µm aufweisen,
die durchschnittliche Primärkristallitgröße der Partikel 20 bis 1000 nm beträgt,
die Klopfdichte von 2.2 bis 3.0 g/cm³ beträgt, und
die Partikel sphärische oder sphäroide Kornform aufweisen, wobei das Verhältnis des größten Durchmessers zum kleinsten Durchmesser eines Partikels 1,8 oder weniger beträgt.

14. Verwendung von Übergangsmetalloxidpartikeln gemäß Anspruch 12 oder 13 als Elektrodenmaterial.

15. Verwendung von Übergangsmetalloxidpartikeln gemäß Anspruch 13 als Speichermaterial in Lithiumakkumulatoren oder als Additiv in Anodenmaterialien.

## Claims

1. Method for producing transition metal oxide particles having general formula (1):
LiMn_{1.5+y}Ni_{0.5-y-z}M_{z}O₄ (1),
wherein M comprises one or more elements from the group of Co, Mg, Fe and Zn,
y is a value from 0 to less than 0.5,
z is a value from 0 to 0.1, and
(y+z) is a value less than 0.5,
the method comprising the steps of:
(a) reacting an aqueous solution of manganese salts, nickel salts and optional one or more further salts of the elements Co, Mg, Fe and Zn with an aqueous solution of an alkali metal hydroxide and NH₃ to precipitate a lithium-free transition metal precursor from the reaction mixture,
wherein the molar starting ratio of OH⁻ ions to metal ions (OH⁻:M²⁺)<1.95 and
wherein the concentration of NH₄⁺ ions in the reaction mixture after establishing a chemical equilibrium is 0.05 mol/l or more,
(b) isolating and optionally drying the precipitated lithium-free transition metal precursor from the reaction mixture,
(c) reacting the lithium-free transition metal precursor with an aqueous solution of a thermally decomposable lithium compound to obtain a lithium-containing transition metal precursor, and
(d) calcining the lithium-containing transition metal precursor at a temperature of 300 °C - 800 °C.

2. Method according to Claim 1, wherein in step (a) the concentration of NH₃ in the reaction mixture is 0.01 to 1.0 mol/l after the establishment of a chemical equilibrium.

3. Method according to Claim 1 or 2, wherein in step (a) the concentration of NH₄⁻ ions in the reaction mixture is 0.07 to 0.25 mol/l after the establishment of a chemical equilibrium, and the concentration of NH₃ in the reaction mixture is 0.05 to 0.75 mol/l after the establishment of a chemical equilibrium.

4. Method according to any one of the preceding claims, wherein the alkali metal hydroxide in step (a) is sodium hydroxide.

5. Method according to any one of the preceding claims, wherein the salts in step (a) are selected from nitrates and sulphates.

6. Method according to any one of the preceding claims, wherein the reaction in step (a) takes place in a continuously operating reactor.

7. Method according to any one of the preceding claims, wherein the calcining in step (d) takes place in an first stage at a temperature from 350 °C to 450 °C and in a second stage at a temperature from 450 °C to 700 °C.

8. Method according to any one of the preceding claims, further comprising the step
(e1) mixing the transition metal oxide particles obtained in step (d) with a lithium-containing compound and a reducing agent, and reacting the mixture in a solid phase reaction at a temperature from 120 °C to 400 °C to obtain transition metal oxide particles having general formula (2),
Li₁₊ₓMn_{1.5+y}Ni_{0.5-y-z}M_{z}O₄ (2),
wherein x is a value from 0<x<1.5,
and M, y and z are as defined in Claim 1.

9. Method according to Claim 8, wherein the reaction in step (e1) is carried out with lithium iodide.

10. Method according to claim 8 or 9, wherein the reaction in step (e1) takes place at at temperature from 180 °C to 300 °C.

11. Method according to any one of Claims 1 to 7, further comprising the step
(e2) electrochemical reaction of the transition metal oxide particles obtained in step (d) with a lithium-containing counter electrode and/or a lithium containing sacrificial electrode in an electrolyte with a potential from 1.4 to 4.0 V, to obtain transition metal oxide particles having general formula (2),
Li₁₊ₓMn_{1.5+y}Ni_{0.5-y-z}M_{z}O₄ (2),
wherein x is a value from 0<x<1.5,
and M, y and z are as defined in Claim 1.

12. Transition metal oxide particles having general formula (1), obtainable by a method as defined in any one of Claims 1 to 7,
LiMn_{1.5+y}Ni_{0.5-y-z}M_{z}O₄ (1),
wherein M, y and z are as defined in Claim 1,
the particles have an average particle size from 1 to 40 µm, the average primary crystallite size of the particles is from 20 to 1000 nm, the tamped density is from 2.0 to 2.8 g/cm³, and the particles have a spherical or spheroidal grain shape, wherein the ratio of the largest diameter to the smallest diameter of a particle is 1.8 or less.

13. Transition metal oxide particles having general formula (2), obtainable by a method as defined in any one of Claims 8 to 11,
Li₁₊ₓMn_{1.5+y}Ni_{0.5-y-z}M_{z}O₄ (2),
wherein M, y and z are as defined in Claim 1 and
x is a value from 0<x<1.5, the particles have an average particle size from 1 to 40 µm, the average primary crystallite size of the particles is from 20 to 1000 nm, the tamped density is from 2.2 to 3.0 g/cm³, and the particles have a spherical or spheroidal grain shape, wherein the ratio of the largest diameter to the smallest diameter of a particle is 1.8 or less.

14. Use of the transition metal oxide particles according to Claim 12 or 13 as electrode material.

15. Use of the transition metal oxide particles according to Claim 13 as storage material in lithium accumulators or as an additive in anode materials.

## Revendications

1. Procédé de production de particules d'oxyde de métal de transition de formule générale (1) :
LiMn_{1,5+y}Ni_{0,5-y-z}M_{z}O₄ (1),
dans laquelle M comprend un ou plusieurs éléments parmi Co, Mg, Fe et Zn,
y est une valeur comprise entre 0 et moins de 0,5,
z est une valeur comprise entre 0 et 0,1, et
(y+z) est une valeur inférieure à 0,5,
le procédé comportant les étapes consistant à :
(a) faire réagir une solution aqueuse de sels de manganèse, de sels de nickel et facultativement d'un ou plusieurs sels supplémentaires des éléments Co, Mg, Fe et Zn avec une solution aqueuse d'un hydroxyde de métal alcalin et NH₃, afin de précipiter un précurseur de métal de transition sans lithium à partir du mélange réactionnel,
dans lequel le rapport molaire initial des ions OH⁻ sur les ions métalliques (OH⁻ : M²⁺) < 1,95 et
dans lequel la concentration en ions NH₄⁺ dans le mélange réactionnel après l'établissement d'un équilibre chimique est de 0,05 mol/l ou plus,
(b) isoler et sécher facultativement le précurseur de métal de transition sans lithium précipité à partir du mélange réactionnel,
(c) faire réagir le précurseur de métal de transition sans lithium avec une solution aqueuse d'un composé de lithium thermiquement décomposable, afin d'obtenir un précurseur de métal de transition contenant du lithium, et
(d) calciner le précurseur de métal de transition contenant du lithium à une température de 300 °C à 800 °C.

2. Procédé selon la revendication 1, dans lequel, à l'étape (a), la concentration en NH₃ dans le mélange réactionnel après l'établissement d'un équilibre chimique est comprise entre 0,01 et 1,0 mol/l.

3. Procédé selon la revendication 1 ou 2, dans lequel, à l'étape (a), la concentration en ions NH₄⁺ dans le mélange réactionnel après l'établissement d'un équilibre chimique est comprise entre 0,07 et 0,25 mol/l, et la concentration en NH₃ dans le mélange réactionnel après l'établissement d'un équilibre chimique est comprise entre 0,05 et 0,75 mol/l.

4. Procédé selon l'une des revendications précédentes, dans lequel l'hydroxyde de métal alcalin de l'étape (a) est un hydroxyde de sodium.

5. Procédé selon l'une des revendications précédentes, dans lequel les sels de l'étape (a) sont choisis parmi des nitrates et des sulfates.

6. Procédé selon l'une des revendications précédentes, dans lequel la réaction de l'étape (a) a lieu dans un réacteur fonctionnant en continu.

7. Procédé selon l'une des revendications précédentes, dans lequel la calcination de l'étape (d) s'effectue en une première phase à une température de 350 °C à 450 °C et en une seconde phase à une température de 450 °C à 700 °C.

8. Procédé selon l'une des revendications précédentes, comportant en outre les étapes consistant à :
(e1) mélanger les particules d'oxyde de métal de transition obtenues à l'étape (d) avec un composé contenant du lithium et un réducteur, et faire réagir le mélange dans une réaction en phase solide à une température de 120 °C à 400 °C, afin d'obtenir des particules d'oxyde de métal de transition de formule générale (2) :
Li₁₊ₓMn_{1,5+y}Ni_{0,5-y-z}M_{z}O₄ (2)
dans laquelle x a une valeur 0 < x < 1,5,
et M, y et z sont définis comme dans la revendication 1.

9. Procédé selon la revendication 8, dans lequel la réaction de l'étape (e1) a lieu avec de l'iodure de lithium.

10. Procédé selon la revendication 8 ou 9, dans lequel la réaction de l'étape (e1) a lieu à une température de 180 ° à 300 °C.

11. Procédé selon l'une des étapes 1 à 7, comportant en outre l'étape consistant à :
(e2) faire réagir par voie électrochimique les particules d'oxyde de métal de transition obtenues à l'étape (d) avec une contre-électrode contenant du lithium et/ou une électrode sacrificielle contenant du lithium dans un électrolyte à un potentiel de 1,4 à 4,0 V, afin d'obtenir des particules d'oxyde de métal de transition de formule générale (2) :
Li₁₊ₓMn_{1,5+y}Ni_{0,5-y-z}M_{z}O₄ (2)
dans laquelle x a une valeur 0 < x < 1,5,
et M, y et z sont définis comme dans la revendication 1.

12. Particules d'oxyde de métal de transition de formule générale (1), pouvant être obtenues par un procédé tel que défini dans l'une des revendications 1 à 7,
LiMn_{1,5+y}Ni_{0,5-y-z}M_{z}O₄ (1),
dans laquelle M, y et z sont définis comme dans la revendication 1,
les particules ont une taille de particule moyenne de 1 à 40 µm,
la taille moyenne des cristallites primaires des particules est comprise entre 20 et 1 000 nm,
la masse volumique est comprise entre 2,0 et 2,8 g/cm³, et
les particules ont une forme de grain sphérique ou sphéroïde, le rapport entre le plus grand diamètre et le plus petit diamètre d'une particule est de 1,8 ou moins.

13. Particules d'oxyde de métal de transition de formule générale (2), pouvant être obtenues par un procédé tel que défini dans l'une des revendications 8 à 11,
Li₁₊ₓMn_{1,5+y}Ni_{0,5-y-z}M_{z}O₄ (2)
dans laquelle M, y et z sont définis comme dans la revendication 1, et
x a une valeur 0 < x < 1,5,
les particules ont une taille de particule moyenne de 1 à 40 µm,
la taille moyenne des cristallites primaires des particules est comprise entre 20 et 1 000 nm,
la masse volumique est comprise entre 2,2 et 3,0 g/cm³, et
les particules ont une forme de grain sphérique ou sphéroïde, le rapport entre le plus grand diamètre et le plus petit diamètre d'une particule est de 1,8 ou moins.

14. Utilisation de particules d'oxyde de métal de transition selon la revendication 12 ou 13 en tant que matériau d'électrode.

15. Utilisation de particules d'oxyde de métal de transition selon la revendication 13 en tant que matériau de stockage dans des accumulateurs au lithium ou en tant qu'additif dans des matériaux d'anode.
